# EUROPEAN PATENT APPLICATION

(11) **EP 2 720 155 A1**
(43) Date of publication of application: **16.04.2014**
(21) Application number: 12801095.6
(22) Date of filing: 06.06.2012
(51) Int. Cl.: G06F 17/30, G06F 3/048, G10K 15/02

(54) **INFORMATION PROCESSING DEVICE, INFORMATION PROCESSING METHOD AND PROGRAM**

(30) Priority: 13.06.2011 JP 2011131673; 13.06.2011 JP 2011131671
(71) Applicant: Sony Corporation, Tokyo 108-0075 (JP)
(72) Inventor: SAITO Mari, Tokyo 108-0075 (JP); TATENO Kei, Tokyo 108-0075 (JP)
(74) Representative: DeVile, Jonathan Mark
(86) International application number: PCT/JP2012/064536
(87) International publication number: WO 2012/173021

(57) **Abstract**

The present technology relates to an information processing device, an information processing method, and a program which may accurately deliver information which is assigned to a part of content by a user. In a content reproducing screen, segment information assigned to designate a segment having a duration of time of a part of the content by the user is displayed in accordance with a position of the segment in the content. Further, information indicating a segment designated for the reproduced content by the user and the segment assignment information which is assigned to the designated segment are acquired. The present technology is applied, for example, to a system which performs a content delivery service.

## Description

### TECHNICAL FIELD

The present technology relates to an information processing device, an information processing method, and a program, and specifically to an information processing device, an information processing method, and a program that allow a user to assign information to content.

### BACKGROUND ART

In the related art, in a content delivery service, a user is generally capable of evaluating content (for example, see Patent Document 1).

Further, in the related art, a moving image delivery service in which a server collects comments input during reproduction of a moving image in a client and the collected comments are displayed so as to be overlaid with the moving image is provided. The user may read and enjoy the comments assigned to respective scenes of the moving image by another user together with the moving image by the service.

### CITATION LIST

### PATENT DOCUMENT

Patent Document 1: Japanese Patent Application Laid-Open No. 2010-244380

### SUMMARY OF THE INVENTION

### PROBLEMS TO BE SOLVED BY THE INVENTION

However, in the above-mentioned moving image delivery service, a reproducing position of the moving image to which the user desires to assign a comment may be different from a reproducing position of the moving image when the comment is actually input and delivered to the server in some cases. As a result, it is limited to accurately deliver the comment to another user who uses the service.

The present technology has been made in an effort to allow a user to accurately deliver information which is assigned to a part of content.

### SOLUTIONS TO PROBLEMS

An information processing device according to an aspect of the present technology includes: a reproducing unit that reproduces content; a display control unit that controls assignment information assigned to designate a segment having a duration of time of a part of content by a user to be displayed in accordance with a position of the segment in the content, during the reproduction of content; and an acquiring unit that acquires information indicating a segment designated by the user for the reproduced content and the assignment information which is assigned to the designated segment.

The display control unit may control the assignment information such that only an interval including at least a segment to which the assignment information is assigned is displayed.

The display control unit may fade in the assignment information at the time of starting the displaying and fades out the assignment information at the time of ending the displaying.

The display control unit may control the assignment information to be scrolled in a predetermined direction and information indicating a segment in the content to which the assignment information is assigned to be displayed, as the reproduction of the content is progressed.

The information processing device may further include: a receiving unit that receives content and the assignment information which is assigned to each of the segments of the content from a server, and the display control unit may control the assignment information received from the server to be displayed in accordance with a position of the segment to which the assignment information is assigned, in the content, during the reproduction of the content received from the server.

The receiving unit may further receive information indicating a user who assigns the assignment information from the server, and the display control unit may control the assignment information and the information indicating the user who assigns the assignment information to be displayed.

The information processing device may further include a transmitting unit that transmits information indicating a segment designated for the reproduced content by a user and the user who designates the segment and the assignment information which is assigned to the designated segment to the server.

The receiving unit may sequentially receive assignment information which is assigned to the segment of each content in another information processing device from the server, and the display control unit may control the received assignment information to be sequentially displayed in time series.

The assignment information may include at least one of text data, a file, evaluation for a segment, and link information to another segment.

The information processing device may further include a manipulating unit that designates a segment for content which is being reproduced.

The manipulating unit may be manipulated to designate a segment in a predetermined unit as a reference, based on a structure of the content.

An information processing method of an information processing device which reproduces content according to an aspect of the present technology includes: controlling assignment information assigned to designate a segment having a duration of time of a part of content by a user to be displayed in accordance with a position of the segment in the content, during the reproduction of content; and acquiring information indicating a segment designated by the user for the reproduced content and the assignment information which is assigned to the designated segment.

A program according to an aspect of the present technology allows a computer to execute a process including: controlling assignment information assigned to designate a segment having a duration of time of a part of content by a user to be displayed in accordance with a position of the segment in the content, during the reproduction of content; and acquiring information indicating a segment designated by the user for the reproduced content and the assignment information which is assigned to the designated segment.

According to an aspect of the present technology, during the reproduction of the content, assignment information which is assigned by designating a segment with a duration of time of a part of the content by a user is displayed in accordance with a position of the segment in the content, and information indicating a segment designated by the user for the reproduced content and the assignment information which is assigned to the designated segment are obtained.

### EFFECTS OF THE INVENTION

According to an aspect of the present technology, information which is assigned to a part of the content by a user may be accurately delivered.

### BRIEF DESCRIPTION OF DRAWINGS

Fig. 1 is a block diagram illustrating an embodiment of an information processing system to which the present technology is applied.
Fig. 2 is a block diagram illustrating a configuration example of a function of a server.
Fig. 3 is a block diagram illustrating a configuration example of a function of a client.
Fig. 4 is a flowchart illustrating a content reproduction process performed by the client.
Fig. 5 is a diagram illustrating a first example of a content reproducing screen.
Fig. 6 is a diagram illustrating a second example of a content reproducing screen.
Fig. 7 is a diagram illustrating a first example of a manipulating screen through which a check-in interval is set.
Fig. 8 is a diagram illustrating a second example of a manipulating screen through which a check-in interval is set.
Fig. 9 is a diagram illustrating a third example of a manipulating screen through which a check-in interval is set.
Fig. 10 is a diagram illustrating a first example of an input screen of segment assignment information.
Fig. 11 is a diagram illustrating a second example of an input screen of segment assignment information.
Fig. 12 is a diagram illustrating an example in which the content reproducing screen of Fig. 5 is updated in accordance with the input of the segment assignment information.
Fig. 13 is a flowchart illustrating a content delivery process performed by the server.
Fig. 14 is a diagram illustrating a first modification of the content reproducing screen.
Fig. 15 is a diagram illustrating a displaying example of the check-in interval.
Fig. 16 is a diagram illustrating a displaying example of link information to another segment.
Fig. 17 is a diagram illustrating a second modification of the content reproducing screen.
Fig. 18 is a flowchart illustrating a segment recommendation process using CF which is performed by the server.
Fig. 19 is a flowchart illustrating a playlist generation process using CF which is performed by the server.
Fig. 20 is a diagram illustrating an extracting method of a segment which is used for a playlist.
Fig. 21 is a flowchart illustrating the segment recommendation process using CBF which is performed by the server.
Fig. 22 is a flowchart illustrating a first embodiment of the playlist generation process using CBF which is performed by the server.
Fig. 23 is a diagram illustrating a specific example of the playlist.
Fig. 24 is a flowchart illustrating a second embodiment of the playlist generation process using CBF which is performed by the server.
Fig. 25 is a diagram illustrating a displaying example of a list of the playlist.
Fig. 26 is a flowchart illustrating the segment recommendation process using a comment assigned to the segment which is performed by the server.
Fig. 27 is a flowchart illustrating a first embodiment of the playlist generation process using a comment assigned to the segment which is performed by the server.
Fig. 28 is a flowchart illustrating a second embodiment of the playlist generation process using a comment assigned to the segment which is performed by the server.
Fig. 29 is a diagram illustrating an example of a comment table.
Fig. 30 is a diagram illustrating an example after replacing a comment of the comment table of Fig. 29 with a comment label.
Fig. 31 is a diagram illustrating an example of a feature amount table.
Fig. 32 is a diagram illustrating an example after replacing a feature amount of the feature amount table of Fig. 31 with a feature amount label.
Fig. 33 is a flowchart illustrating a segment recommendation process based on a ranking which is performed by the server.
Fig. 34 is a flowchart illustrating a learning process of a correlation of a segment which is performed by the server and an image.
Fig. 35 is a flowchart illustrating a first embodiment of a slide-show generation process which is performed by the server.
Fig. 36 is a flowchart illustrating a second embodiment of a slide-show generation process which is performed by the server.
Fig. 37 is a block diagram illustrating a configuration example of a computer.

### MODE FOR CARRYING OUT THE INVENTION

Hereinafter, modes for carrying out the present technology (hereinafter, referred to as embodiments) will be described. The description will be performed in the following order.
1. Embodiments
2. Modifications

### <1. Embodiments>

### [Configuration example of information processing system 1]

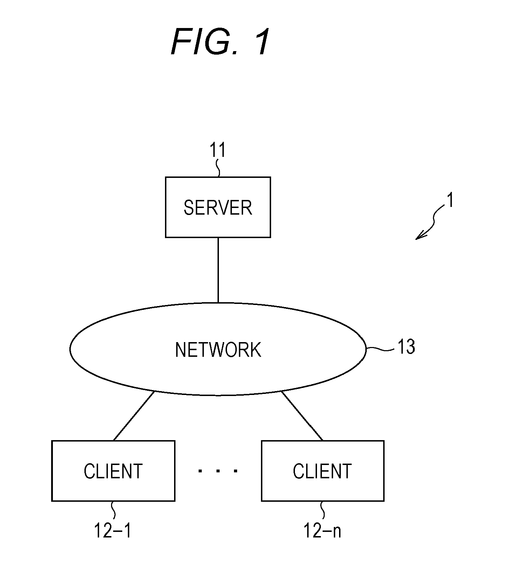

Fig. 1 is a block diagram illustrating an embodiment of an information processing system 1 to which the present technology is applied.

The information processing system 1 includes a server 11 and clients 12-1 to 12-n. The server 11 and the clients 12-1 and 12-n are connected to each other through a network 13.

The server 11 recommends and delivers the content to the clients 12-1 to 12-n through the network 13. Further, the server 11 recommends and delivers the content in the unit of segment which is an interval of a part of the content, rather than the entire content.

The clients 12-1 to 12-n are configured by a device in which the content can be used, such as a personal computer, a personal digital assistance, a cellular phone, or an audio player. Therefore, the user uses the clients 12-1 to 12-n to use the content delivered from the server 11.

Further, in the clients 12-1 to 12-n, the user may designates an arbitrary segment of the content or assigns information such as a comment to the designated segment. Further, hereinafter, when the user designates the arbitrary segment of the content, it is called as "check-in".

The clients 12-1 to 12-n transmit check-in information including information indicating a checking-in user and a segment and information which is assigned to the segment (hereinafter, referred to as segment assignment information) to the server 11 through the network 13.

In contrast, the server 11 recommends and delivers the content in the unit of segment based on the check-in information collected from the clients 12-1 to 12-n, which will be described below.

Hereinafter, in a case where the clients 12-1 to 12-n do not need to be individually discriminated, the clients 12-1 to 12-n are simply referred to as the client 12.

Further, hereinafter, an example that the information processing system 1 delivers and recommends music will be described. Therefore, if not specifically mentioned, a terminology of content indicates music or data of the music (music data).

### [Configuration example of server 11]

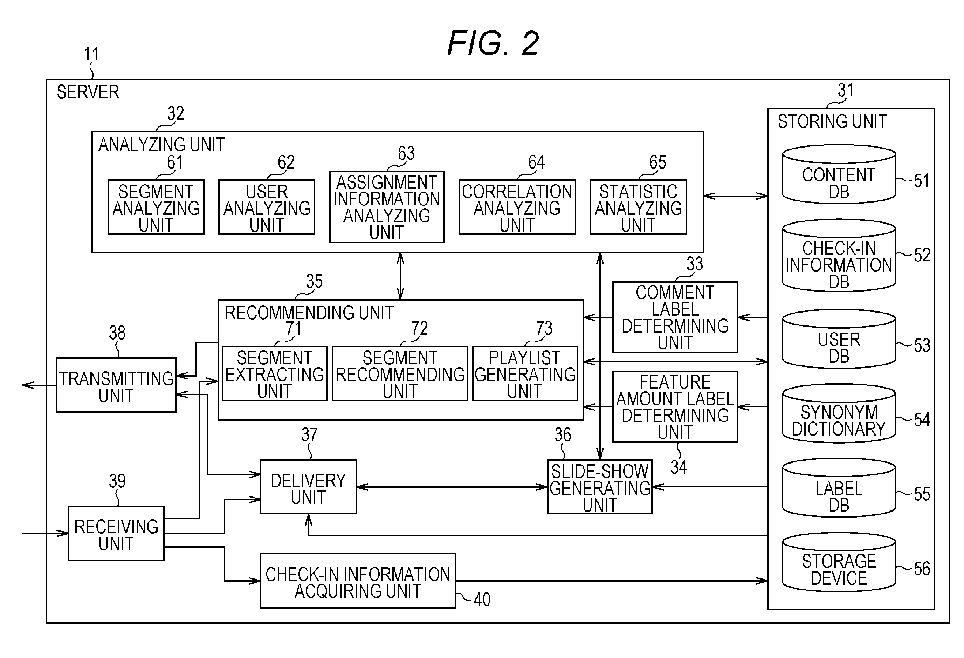

Fig. 2 is a block diagram illustrating a configuration example of the server 11.

The server 11 includes a storing unit 31, an analyzing unit 32, a comment label determining unit 33, a feature amount label determining unit 34, a recommending unit 35, a slide-show generating unit 36, a delivery unit 37, a transmitting unit 38, a receiving unit 39, and a check-in information acquiring unit 40.

The storing unit 31 includes a content database (DB) 51, a check-in information database (DB) 52, a user database (DB) 53, a synonym dictionary 54, a label database (DB) 55, and a storage device 56.

The content DB 51 is a database in which content delivered by the server 11 and a feature amount of the content are stored.

Further, the type or the number of feature amounts of the content to be stored may be arbitrarily set. For example, the feature amount such as a waveform, a volume, a melody, a rhythm, chord progression, an instrumental setting, or lyrics may be used.

In the check-in information DB 52, a history that is checked-in by the user in each of the clients 12 is stored. More specifically, in the check-in information DB 52, the check-in information including information indicating the checking-in user and segment and segment assignment information which is assigned to the segment is stored. That is, the check-in information DB 52 collects the check-in information transmitted from each of the clients 12.

In the user DB 53, personal information of a user who uses the information processing system 1 is stored.

In the synonym dictionary 54, various synonym data is stored.

In the label DB 55, a label which briefly represents a characteristic of the content or the segment is stored.

The storage device 56 stores various data which is not stored in the content DB 51 to the label DB 55, for example, content reproducing software.

The analyzing unit 32 performs various analysis processes using data stored in each part of the storing unit 31. The analyzing unit 32 notifies the recommending unit 35 and the slide-show generating unit 36 of an analysis result and stores the analysis result in the storage device 56.

The analyzing unit 32 includes a segment analyzing unit 61, a user analyzing unit 62, an assignment information analyzing unit 63, a correlation analyzing unit 64, and a statistic analyzing unit 65.

The segment analyzing unit 61 performs various analysis processes on the segment using data stored in each part of the storing unit 31. For example, the segment analyzing unit 61 analyzes a feature amount of each segment or a degree of similarity between segments.

The user analyzing unit 62 performs various analysis processes on a user who uses the information processing system 1 using data stored in each part of the storing unit 31. For example, the user analyzing unit 62 analyzes preference of the user or a degree of similarity between users.

The assignment information analyzing unit 63 performs various analysis processes on the segment assignment information using data stored in each part of the storing unit 31. For example, the assignment information analyzing unit 63 analyzes a feature amount such as a comment or an image included in the segment assignment information or a degree of similarity between comments or images.

The correlation analyzing unit 64 analyzes correlation of the various analysis results by the segment analyzing unit 61, the user analyzing unit 62, and the assignment information analyzing unit 63.

The statistic analyzing unit 65 aggregates or analyzes statistics of the checked-in segment or user, and for example, generates various rankings of the segment.

The comment label determining unit 33 has a function that determines a label (hereinafter, referred to as a comment label) which is suitable for a comment which is assigned to the segment by performing a learning process in advance. Further, an arbitrary method may be used as a learning method of the comment label determining unit 33.

The comment label determining unit 33 extracts a segment to which a comment is assigned from the check-in information DB 52 and selects a comment label which is suitable for the comment assigned to the extracted segment from labels stored in the label DB 55. The comment label determining unit 33 supplies information indicating a combination of the extracted segment, a user who assigns the comment, and the comment label to the recommending unit 35.

The feature amount label determining unit 34 has a function which determines a label (hereinafter, referred to as a feature amount label) suitable for each of the segments based on the feature amount of each of the segments by performing the learning process in advance. An arbitrary method may be used as a learning method of the feature amount label determining unit 34.

The feature amount label determining unit 34 calculates the feature amount of each of the segments that are checked-in by the user using the content DB 51 and the check-in information DB 52 and selects a feature amount label suitable for each of the segments from the labels stored in the label DB 55, based on the feature amount of each of the segments. The feature amount label determining unit 34 supplies information indicating the feature amount label of each of the segments to the recommending unit 35.

The recommending unit 35 extracts a segment which is recommended to the user and recommends the segment. The recommending unit 35 includes a segment extracting unit 71, a segment recommending unit 72, and a playlist generating unit 73.

The segment extracting unit 71 extracts the segment which is recommended to the user based on the analysis result by the analyzing unit 32, the comment label which is assigned to the segment by the comment label determining unit 33, and the feature amount label which is assigned to the segment by the feature amount label determining unit 34.

The segment recommending unit 72 generates segment recommendation information for recommending the segment to the user, based on the segment extracted by the segment extracting unit 71. More specifically, the segment recommending unit 72 generates segment recommendation information including information on the extracted segment and a recommendation reason using the content DB 51 or the check-in information DB 52. The segment recommending unit 72 transmits the generated segment recommendation information to the client 12 through the transmitting unit 38 and the network 13.

Further, the segment recommending unit 72 generates information (hereinafter, referred to as ranking information) including information on a segment which is ranked at a high level among the segments generated by the statistic analyzing unit 65 using the content DB 51 or the check-in information DB 52. The segment recommending unit 72 transmits the generated ranking information to the client 12 through the transmitting unit 38 and the network 13.

The playlist generating unit 73 generates a playlist for recommending the segment to the user based on the segment extracted by the segment extracting unit 71. Here, the playlist is a list in which the extracted segments are arranged in a reproducing order. By using the playlist, the segments in the playlist may be automatically reproduced in a designated reproducing order in the client 12.

The playlist generating unit 73 arranges the extracted segments in the reproducing order in accordance with a predetermined rule using the content DB 51 or the check-in information DB 52 and generates information (hereinafter, referred to as playlist information) having information on each of the segments as a list. The playlist generating unit 73 transmits the generated playlist information to the client 12 through the transmitting unit 38 and the network 13.

The slide-show generating unit 36 generates a slide-show which displays an image so as to be switched, together with BGM (background music). Specifically, the slide-show generating unit 36 orders the segment analyzing unit 61 to analyze the feature amount of each of the segments of the content which is used for the slide-show and obtains an analysis result. Further, the slide-show generating unit 36 orders the assignment information analyzing unit 63 to analyze the feature amount of the image which is used for the slide-show and obtains an analysis result. The slide-show generating unit 36 selects an appropriate combination of each of the segments and the image and generates a slide-show, based on the obtained analysis results.

The slide-show generating unit 36 generates data (hereinafter, referred to as slide-show data) for reproducing the generated slide-show using data stored in each part of the storing unit 31 and supplies the slide-show data to the delivery unit 37.

The delivery unit 37 receives a request to transmit data (hereinafter, referred to as the content reproduction data) for reproducing the content (or a segment thereof) through the network 13 and the receiving unit 39 from the client 12. The delivery unit 37 reads content data of the content designated by the client 12 from the content DB 51 and reads the check-in information which is associated with the designated content from the check-in information DB 52. The delivery unit 37 transmits the content reproduction data including the read content data and the check-in information through the transmitting unit 38 and the network 13 to the client 12 of a requesting source.

Further, the delivery unit 37 receives a request to deliver the slide-show from the client 12 through the network 13 and the receiving unit 39. In this case, the delivery unit 37 supplies the information received from the client 12 to the slide-show generating unit 36 and orders the slide-show generating unit 36 to generate the slide-show. The delivery unit 37 obtains the slide-show data from the slide-show generating unit 36 and transmits the slide-show data to the client 12 of a requesting source through the transmitting unit 38 and the network 13.

The transmitting unit 38 transmits various information, data, and commands to the client 12 through the network 13 in accordance with a predetermined communication method.

The receiving unit 39 receives various information, data, and commands from the client 12 through the network 13 in accordance with a predetermined communication method. The receiving unit 39 supplies the received information, data, and commands to the recommending unit 35, the delivery unit 37, and the check-in information acquiring unit 40, if necessary.

The check-in information acquiring unit 40 receives the check-in information from the client 12 through the network 13 and the receiving unit 39 and stores the check-in information to the check-in information DB 52.

### [Configuration example of client 12]

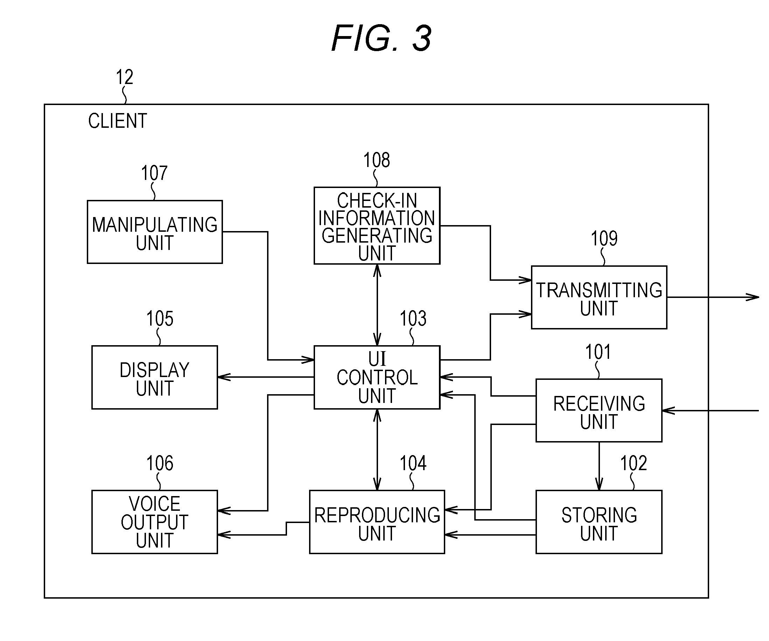

Fig. 3 is a block diagram illustrating a configuration example of the client 12.

The client 12 includes a receiving unit 101, a storing unit 102, an UI control unit 103, a reproducing unit 104, a display unit 105, a voice output unit 106, a manipulating unit 107, a check-in information generating unit 108, and a transmitting unit 109.

The receiving unit 101 receives various information, data, and commands from the server 11 through the network 13 in accordance with a predetermined communication method. The receiving unit 101 stores the received information, data, and commands in the storing unit 102 or supplies the received information, data, and commands to the UI control unit 103 and the reproducing unit 104, if necessary.

The storing unit 102 appropriately stores the information or data received from the server 11.

The UI control unit 103 controls the display unit 105 and the voice output unit 106 in accordance with the command input by the user through the manipulating unit 107 to control a user interface. For example, the UI control unit 103 displays a content reproducing screen or a manipulating screen on the display unit 105 or outputs a voice therewith from the voice output unit 106 based on information or data which is received from the server 11 through the receiving unit 101, information or data which is stored in the storing unit 102, or information on content supplied from the reproducing unit 104.

Further, the UI control unit 103 transmits a command to the server 11 which is input by the user through the manipulating unit 107 to the server 11 through the transmitting unit 109 and the network 13. Further, the UI control unit 103 orders the reproducing unit 104 to reproduce the content and to stop the reproduction of the content. Furthermore, the UI control unit 103 supplies information indicating the segment which is checked-in by the user and the segment assignment information which is assigned to the segment to the check-in information generating unit 108.

The reproducing unit 104 reproduces the content data which is received through the receiving unit 101 or the content data which is stored in the storing unit 102 and supplies a voice obtained as a result of reproduction to the voice output unit 106. Further, the reproducing unit 104 supplies information on the content obtained as a result of reproduction of the content data to the UI control unit 103.

The display unit 105 displays various screens such as the content reproducing screen or the manipulating screen based on the control of the UI control unit 103.

The voice output unit 106 is configured by, for example, a speaker or a voice output terminal and outputs the voice supplied from the UI control unit 103 and the reproducing unit 104.

The manipulating unit 107 is configured by various input devices, for example, a keyboard, a button, a switch, or a pointing device. The user manipulates the manipulating unit 107 to issue various commands to the client 12 or to input information or data. The manipulating unit 107 supplies the input information, data, or commands to the UI control unit 103.

When the user checks-in the segment of the content, the check-in information generating unit 108 generates the check-in information including information indicating the checking-in user and the segment and the segment assignment information which is assigned to the segment. The check-in information generating unit 108 transmits the generated check-in information to the server 11 through the transmitting unit 109.

The transmitting unit 109 transmits various information, data, and commands to the server 11 through the network 13 in accordance with a predetermined communication method.

### [Process of information processing system 1]

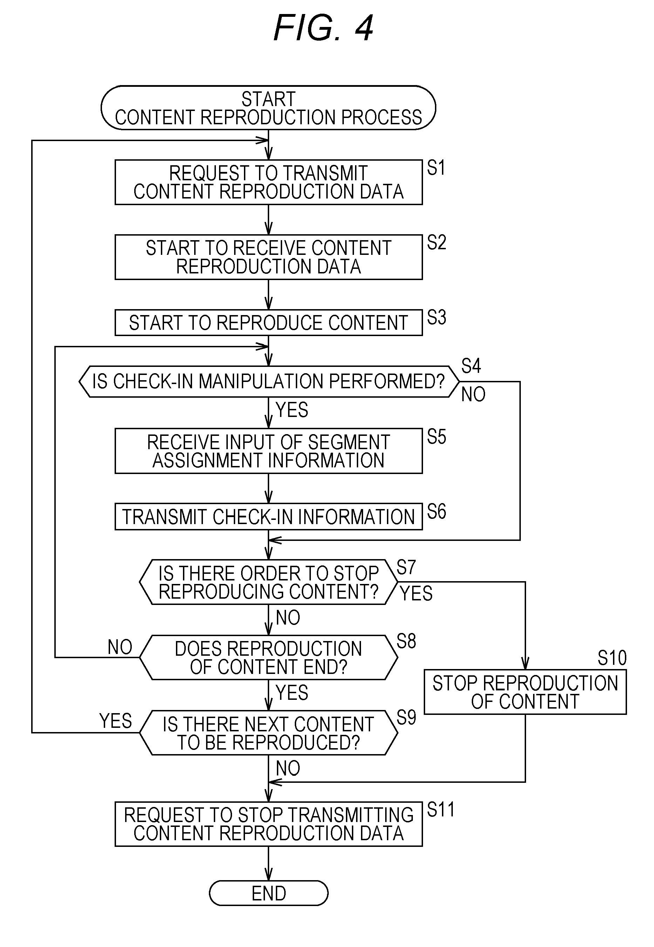

Next, a process of the information processing system 1 will be described with reference to Figs. 4 to 36.

### [Content reproduction process]

First, a content reproduction process which is performed by the client 12 will be described with reference to a flowchart of Fig. 4.

Further, the process starts, for example, when the user manipulates the manipulating unit 107 of the client 12 to input a command to reproduce content and the command is notified to the UI control unit 103.

In step S1, the UI control unit 103 requests the server 11 to transmit the content reproduction data for reproducing the designated content through the transmitting unit 109 and the network 13.

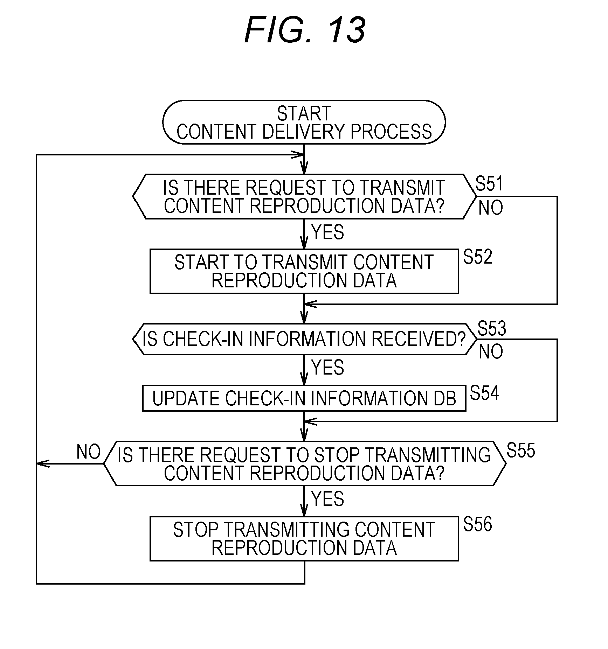

In contrast, in step S52 of Fig. 13, which will be described below, the server 11 starts transmission of the content reproduction data to the client 12 of a requesting source through the network 13.

In step S2, the receiving unit 101 of the client 12 starts reception of the content reproduction data which is transmitted from the server 11 through the network 13.

Further, even though a method for delivering the content from the server 11 to the client 12 is not limited to a predetermined method, hereinafter, an example in which the content is delivered by a streaming method will be described.

In step S3, the client 12 starts the reproduction of content. Specifically, the receiving unit 101 starts to supply the content data included in the received content reproduction data to the reproducing unit 104. The reproducing unit 104 starts the reproduction of the content data and outputs a voice (that is, music) obtained as a result thereof from the voice output unit 106. Further, the reproducing unit 104 supplies information on the content obtained as a result of reproducing the content data to the UI control unit 103. Here, the information on the content includes a song title of the content, a title of an album with the content being recorded, and an image of an album cover.

Further, the receiving unit 101 starts to supply the check-in information included in the received content reproduction data to the UI control unit 103. The UI control unit 103 displays the content reproducing screen on the display unit 105 so as to be synchronized with the reproduction of the content, based on the check-in information supplied from the receiving unit 101 and the information on the content which is supplied from the reproducing unit 104.

### [Example of content reproducing screen]

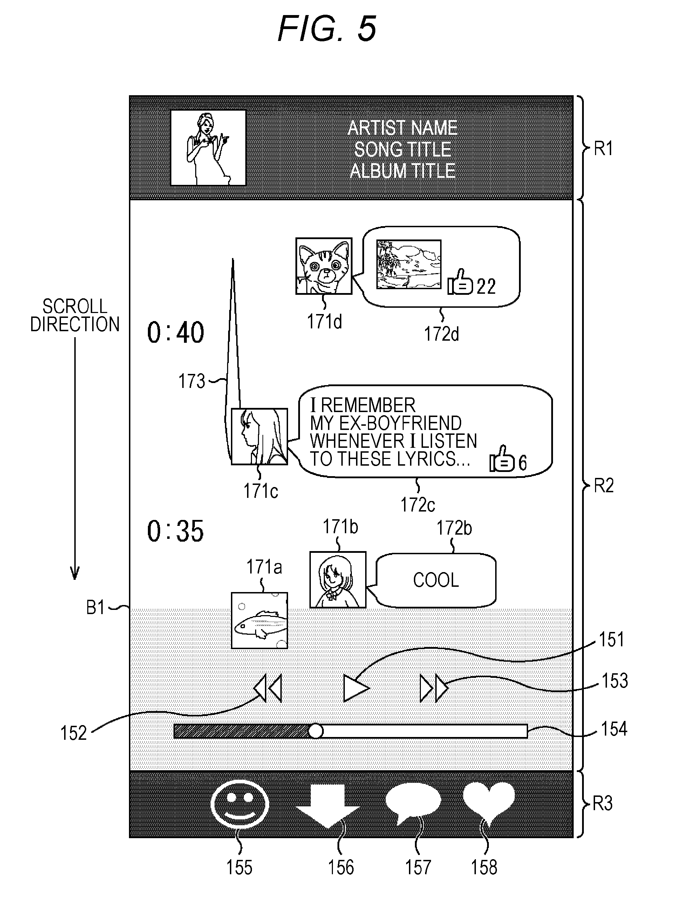

Fig. 5 illustrates an example of the content reproducing screen.

The content reproducing screen is mainly divided into a region R1, a region R2, and a region R3.

In the region R1, information on content which is being reproduced is displayed. For example, an artist name, a song title, a name of an album with the content and an album cover of content which is being reproduced are displayed.

In the lower part of the region R2, a button for manipulating the reproduction of content and the like are displayed. Specifically, a play button 151 which performs reproduction of the content, a rewind button 152 which performs rewinding, a fast-forwarding button 153 which performs fast-forwarding, and a progress bar 154 which designates a reproducing position of the content are displayed.

Further, in the region R2, in accordance with the progress of the reproduction of the content, a user who checks-in each of the segments of the content and the assigned segment assignment information are displayed associated with the position (a position of the content on a time axis) in the content of the segment.

Specifically, at the left edge of the region R2, scales indicating the reproducing position of the content are displayed.

Further, in the region R2, icons 171a to 171d indicating users who check-in the reproducing content are displayed. The icons 171a to 171d are displayed near a time when each user checks-in the content, on the time axis of the reproducing content. Further, when the segment assignment information is assigned to the checked-in segment, the segment assignment information is displayed in a word balloon at the right of each icon.

For example, a word balloon 172b including a comment is displayed at the right of the icon 171b. That is, it is known that a user indicated by the icon 171b assigns a comment saying "Cool" to the checked-in segment.

Further, a word balloon 172c including a comment is displayed at the right of the icon 171c. That is, it is known that a user indicated by the icon 171c assigns a comment saying "I remember my ex-boyfriend whenever I listen to these lyrics..." to the checked-in segment.

Further, a word balloon 172d including an image is displayed at the right of the icon 171d. That is, it is known that a user indicated by the icon 171d assigns an image in the word balloon 172d to the checked-in segment.

Further, a scale 173 indicating a checked-in interval is displayed at the left of the icon 171c. As described below, the user may check-in an arbitrary position of the content by a pinpoint or check-in by designating an interval having an arbitrary length. That is, the user may designate the segment by a pinpoint or designate a segment having an arbitrary time interval.

The segment (interval) in the content to which the user indicated by the icon 171c checks-in and the segment (interval) in the content to which the segment assignment information in the word balloon 172c is assigned are illustrated by the scale 173.

Further, the user may vote the segment assignment information which is assigned to each of the segments. For example, when the segment assignment information with which the user feels empathy or uneasy is displayed, the user may vote by designating the word balloon in which the segment assignment information is displayed or an icon next to the balloon by clicking or touching the word balloon or the icon.

The polling number to the segment assignment information is displayed in the word balloon together with a predetermined mark. For example, in this example, polling is 0 times, 6 times, and 22 times performed for the segment assignment information in the word balloons 172b to 172d, respectively.

The display in the region R2 is entirely scrolled in the downward direction in accordance with the progress of the reproduction of the content excepting the play button 151 to the progress bar 154. Further, a border B1 at which a background color in the region R2 is changed indicates a current reproducing position of the content.

Accordingly, the icons 171a to 171d and word balloons 172b to 172d are displayed in the region R2 for a predetermined period regardless of a duration of time of a corresponding segment. That is, the icons 171a to 171d and word balloons 172b to 172d appear in the region R2 at a predetermined time before reproducing a beginning of the corresponding segment and disappear from the region R2 at a predetermined time after reproducing the beginning of the corresponding segment.

In the region R3, buttons 155 to 158 for performing various manipulations other than the reproduction of the content are displayed. These buttons are used for, for example, manipulations to perform check-in or switch a display mode.

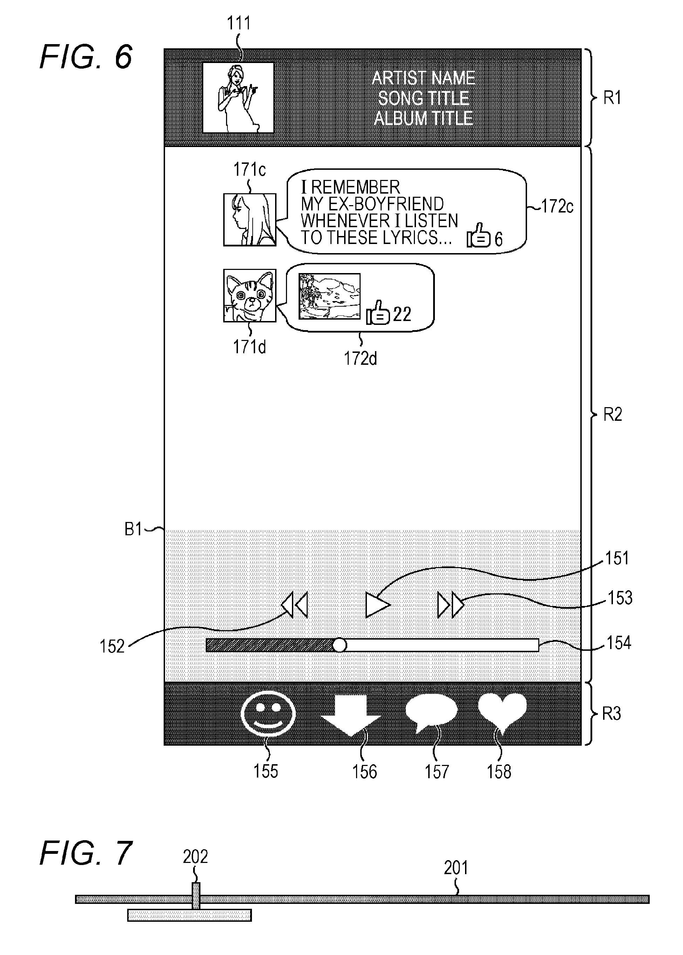

For example, the user manipulates any of the buttons 155 to 158 to switch the display mode and may display the content reproducing screen illustrated in Fig. 6 on the display unit 105.

When the content reproducing screen of Fig. 6 is compared with the content reproducing screen of Fig. 5, the displayed contents in the region R2 are different from each other. Specifically, in the region R2, an icon indicating a user who checked-in the segment in the past and a word balloon indicating the segment assignment information are displayed in a portion (time) of content which is currently being reproduced.

In this example, a screen represents when a portion of the content when 40 seconds has elapsed is reproduced. Accordingly, among the icons, etc. displayed in the region R2 of Fig. 5, only the icon 171c and the word balloon 172c and the icon 171d and the word balloon 172d related with content to which the user checks-in 40 seconds later are displayed.

Further, the icon 171c and the word balloon 172c and the icon 171d and the word balloon 172d are displayed in the region R2 of Fig. 6 only for an interval including at least the corresponding segments, respectively.

For example, the icon 171c and the word balloon 172c appear in the region R2 at a predetermined time before reproducing the beginning of the corresponding segment (for example, one second before). The icon 171c and the word balloon 172c disappear from the region R2 at a predetermined time after reproducing an ending of the corresponding segment (for example, one second later).

Similarly, the icon 171d and the word balloon 172d appear in the region R2 at a predetermined time before reproducing a segment of a corresponding pinpoint and disappear from the region R2 at a predetermined time after reproducing the corresponding segment.

As described above, the segment assignment information in the word balloon is displayed in the region R2 of Fig. 6 only for an interval including at least a segment to which the information is assigned. Therefore, in the content reproducing screen of Fig. 6, it is possible to more intuitively, easily, and accurately recognize a portion of the content to which the segment assignment information is assigned, as compared with the content reproducing screen of Fig. 5.

Further, in the content reproducing screen of Fig. 6, the icons and the word balloons may be faded in when the display starts and faded out when the display ends.

Further, when the client 12 is configured by a tablet type terminal in which pinch manipulation with two fingers is available on the screen of the display unit 105, a displaying range may be enlarged or reduced by the pinch manipulation on the content reproducing screen of Fig. 5 or Fig. 6.

By doing this, for example, when there are too many icons or word balloons and thus the screen is hardly visible at a default display size, a portion where the icons or the word balloons are concentrated is easily enlarged to identify the details. In contrast, when the icons or the word balloons are rarely displayed, the display size of the content reproducing screen of Fig. 5 is reduced to be smaller than the default size to extend a duration of time of the content to be displayed in the screen.

Referring to Fig. 4, again, in step S4, the UI control unit 103 determines whether the checking-in manipulation of the manipulating unit 107 is performed. If it is determined that the checking-in manipulation is performed, the process proceeds to step S5.

Further, in this case, before checking-in the content, an interval to be checked-in may be set.

### [Method of setting check-in interval]

Here, an example of a method of setting a check-in interval will be described with reference to Figs. 7 to 9.

For example, as illustrated in Fig. 7, a starting point and an ending point are set in an arbitrary position of content which is being reproduced using a progress bar 201 and a cursor 202 so that the check-in interval may be set.

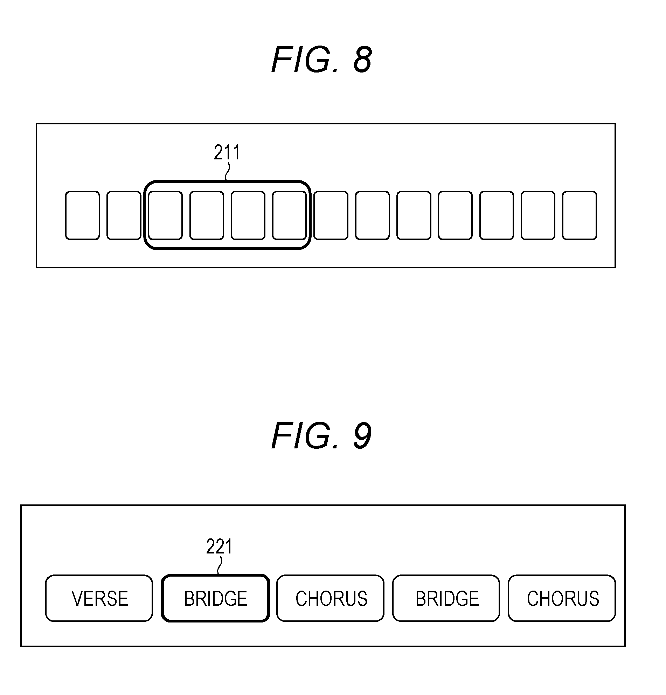

Further, for example, as illustrated in Fig. 8, the content which is being reproduced is presented by being divided into minimum segments with a predetermined unit (for example, in the unit of bar) and one or more minimum segments are selected by a cursor 211 so that the check-in interval may be set.

Furthermore, for example, as illustrated in Fig. 9, the content which is being reproduced is presented by being divided into segments based on a song structure such as verse, bridge, or chorus and one or more segments are selected by the cursor 221 so that the check-in interval may be set.

By doing this, the user may easily set the check-in interval (a duration of time or position of the segment) in a desired interval.

Further, in small device such as a cellular phone or a portable information terminal, the screen of the display unit 105 is small so that it is considered that the manipulation by the method illustrated in Figs. 7 to 9 may be difficult.

Therefore, for example, the screen of the display unit 105 is tapped to designate the starting point of the check-in interval and the screen is tapped once again to designate the ending point.

Otherwise, for example, the screen of the display unit 105 is tapped to designate the starting point of the check-in interval and an interval after a predetermined time (for example, 10 seconds later) from the starting point may be set as a check-in interval.

Further, for example, on the screen of the display unit 105, the check-in interval may be set by the position or the interval where the finger is touched on the screen using two fingers, by so-called pinch manipulation.

By doing this, the check-in interval is set to designate a segment in an arbitrary position and of the duration of time of the content.

Further, if the check-in interval is not set, for example, the reproducing position of the content when the check-in manipulation is performed is set as the starting point and the ending point. That is, the check-in interval is set in the content reproducing position by the pinpoint.

Further, for example, the entire content is set as the check-in interval so that the entire content may be designated. That is, the user may check-in the entire content.

The UI control unit 103 obtains information indicating the check-in interval set by the manipulating unit 107.

Further, when the user arbitrarily sets the check-in interval by the manipulation illustrated in Fig. 7, a segment, which is a processing unit by a segment recommendation process or a playlist generation process which will be described below, may vary between users so that the process may be complicated.

For example, the check-in interval which is set by the user is approximated to an interval with a predetermined minimum segment as a reference, and the approximated interval may be set as a segment (hereinafter, referred to as an approximate segment) designated by the user.

Alternatively, for example, when the check-in intervals which are set by a plurality of users overlap, the approximate segment may be set by a statistical process. Specifically, the check-in interval which most frequently overlaps by the plurality of users may be set as the approximate segment.

Further, when the segment is approximated, for example, when the process is performed inside using the approximate segment to display the segment outside, an original check-in interval before approximation may be used.

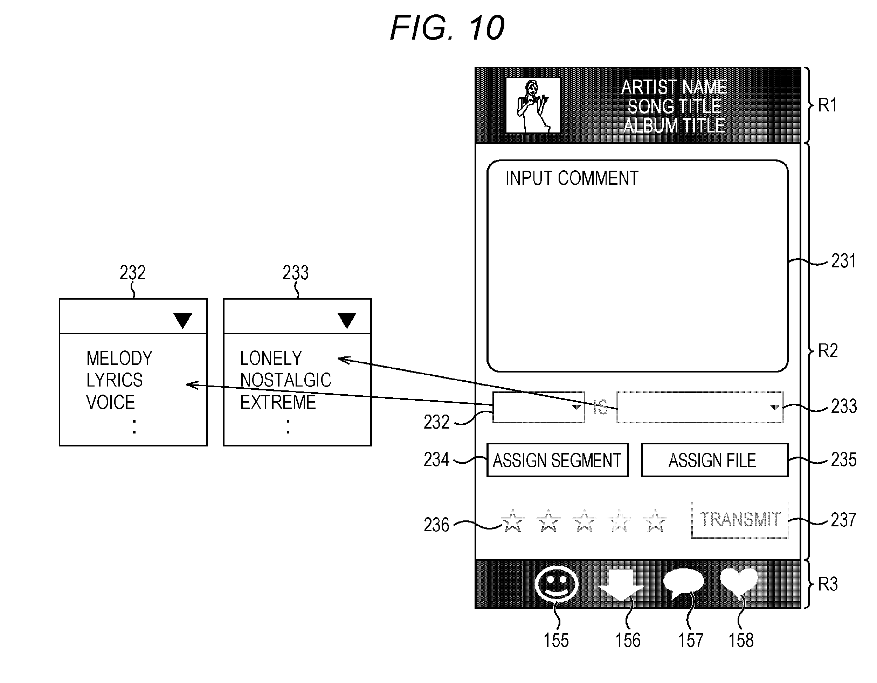

Referring to Fig. 4 again, in step S5, the client 12 receives input of the segment assignment information. Specifically, the UI control unit 103 displays the input screen illustrated in Fig. 10 on the display unit 105.

The input screen of Fig. 10 is different from the content reproducing screen of Fig. 5, in that an input screen of the segment assignment information is displayed in the region R2. Specifically, in the region R2, a comment input section 231, a pull-down menu 232, a pull-down menu 233, a segment assignment button 234, a file assignment button 235, an evaluation input section 236, and a transmission button 237 are displayed.

The comment input section 231 is a section for inputting text data such as a comment for a segment of the checked-in content.

The pull-down menu 232 and the pull-down menu 233 are provided so as to easily assign the comment to the segment of the designated content. For example, the pull-down menu 232 or the pull-down menu 233 is touched or clicked to be designated to display items illustrated at the left side of Fig. 10. A desired item from the items displayed in the each menu is selected so that a comment expressing that "A is B" (for example, lyrics are radical) may be quickly and simply input.

Further, A of "A is B" indicates an item selected from the pull-down menu 232 and B indicates an item selected from the pull-down menu 233.

Further, for example, a phrase which is frequently used in the comment assigned by the user may be extracted to be set as selection items of the pull-down menu 232 and the pull-down menu 233. In this case, frequently used phrases may be extracted also from the comment of another user to be set as selection items or frequently used phrases by each user may be extracted to customize the selection items for each user.

The segment assignment button 234 is manipulated when another segment is linked to the segment of the checked-in content.

Here, a specific example of manipulation which links another segment to the segment of the checked-in content will be described.

For example, when the segment assignment button 234 is pressed, a screen for selecting content of the linking destination is displayed. When the content is selected, the selected content starts to be reproduced and the content reproducing screen which is described above with reference to Fig. 5 is displayed. For example, by the same manipulations as the manipulations described above with reference to Figs. 7 to 9, the interval of the content which is being reproduced is set to designate the segment of the linking destination.

Further, in this case, the segment may be linked not only to a segment of content which is different from the content which is being reproduced but also to a segment of the content which is being reproduced.

The file assignment button 235 is manipulated when a file is assigned to the segment of the checked-in content. For example, the file assignment button 235 is manipulated to display a screen for selecting a file to be assigned and thus the user may select the file to be assigned.

Further, a type of the file to be assigned is not specifically limited, for example, a file such as an image, a voice, or a text may be assigned.

The evaluation input section 236 assigns five levels of evaluation to the segment of the checked-in content. The evaluation is represented by the number of stars. The user may designate the number of stars to assign the evaluation to the segment of the checked-in content.

Further, for example, evaluation may be assigned below five levels or five levels or more levels, or good or bad may be selected.

The transmission button 237 is a button which transmits the segment assignment information input by the comment input section 231 or the evaluation input section 236 to the server 11.

A user inputs or sets a desired item among a comment, a segment of the linking destination, a file, and evaluation from the input screen of Fig. 10 using the manipulating unit 107. Therefore, the UI control unit 103 obtains input or set segment assignment information.

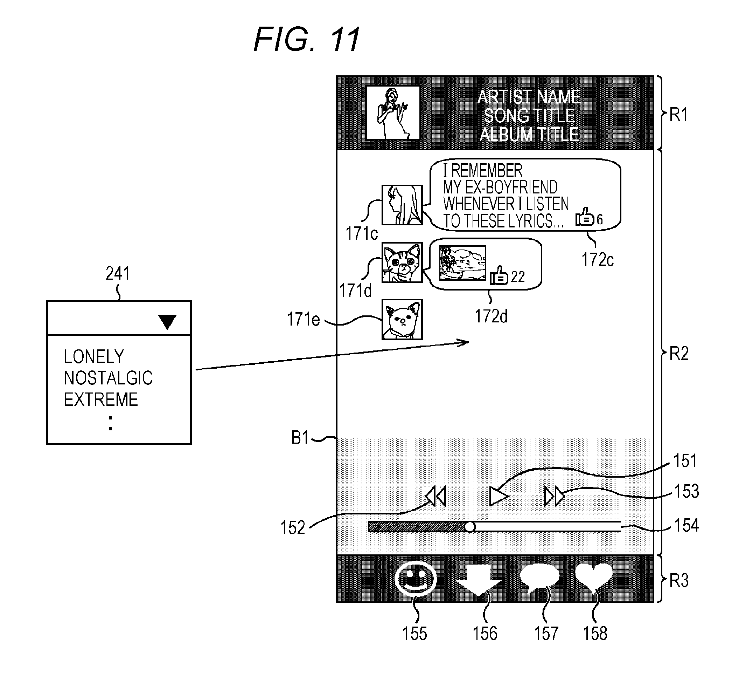

Further, as illustrated in Fig. 11, the pull-down menu 241 is displayed on the content reproducing screen, a desired comment is selected therefrom, and a comment is simply assigned to the checked-in segment.

Further, even though detailed description is not provided, information same as the segment assignment information described above may be assigned to the entire content without specifically designating a segment.

In this case, similarly to the pull-down menus 232 and 233 of Fig. 10, the selection item of the pull-down menu 241 may be set based on the frequently used phrase in the comments assigned by users.

Referring to Fig. 4 again, in step S6, the client 12 transmits the check-in information. Specifically, when the transmission button 237 is pressed in the input screen of Fig. 10, the manipulating unit 107 notifies the UI control unit 103 that there is a command to transmit the check-in information. The UI control unit 103 supplies the information (for example, a time of a segment in the content) indicating the segment checked-in by the user and the segment assignment information which is assigned to the segment to the check-in information generating unit 108.

The check-in information generating unit 108 generates the check-in information including information indicating the checked-in segment and the checking-in user and the assigned segment assignment information. The check-in information generating unit 108 transmits the generated check-in information to the server 11 through the transmitting unit 109 and the network 13.

Thereafter, the process proceeds to step S7.

In addition to this, in step S53 of Fig. 13 which will be described below, the server 11 receives the check-in information transmitted from the client 12 and updates the check-in information DB 52 in step S54.

In this case, in each client 12 which is reproducing the checked-in content, the checking-in user and the assigned segment assignment information may be displayed in real time.

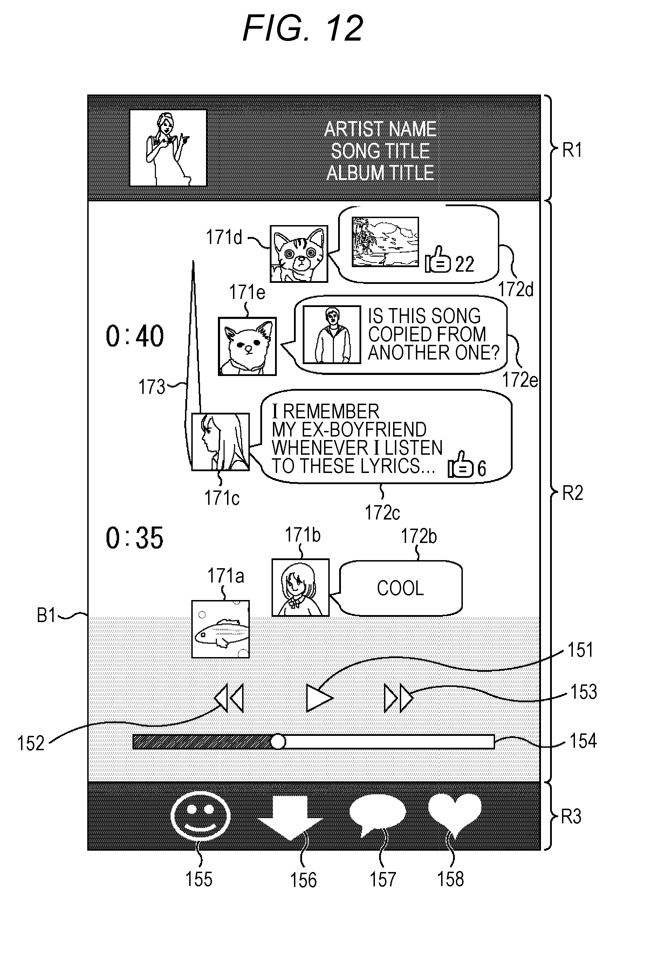

For example, Fig. 12 illustrates an example of the updated content reproducing screen of Fig. 5 by performing a check-in process. In the content reproducing screen of Fig. 12, an icon 171e and a word balloon 172e are added as compared with the content reproducing screen of Fig. 5. That is, the user indicated by the icon 171e checks-in the segment and the segment assignment information illustrated in the word balloon 172e for the checked-in segment is assigned.

Further, in the word balloon 172e, an image (for example, a cover) and a comment indicating (a segment of) another content which is linked to the checked-in segment are displayed. In this example, a comment indicating that a part which is approximately at 40 seconds of the content which is being reproduced is similar to a part of content included in an album with the cover in the word balloon 172e is displayed.

Referring to Fig. 4 again, on the other hand, in step S4, if it is determined that no check-in manipulation is performed, steps S5 and S6 are skipped and the process proceeds to step S7.

In step S7, the UI control unit 103 determines that whether to be ordered to stop reproducing the content. If it is determined that the reproduction of the content is not ordered to stop, the process proceeds to step S8.

In step S8, the UI control unit 103 determines whether the reproduction of the content ends. If it is determined that the reproduction of the content does not end, the process returns to step S4.

Thereafter, until the reproduction of the content is ordered to stop in step S7 or it is determined that the reproduction of the content ends in step S8, processes of steps S4 to S8 are repeated.

In the meantime, in step S8, if it is determined that the reproduction of the content ends, the process proceeds to step S9.

In step S9, the UI control unit 103 determines whether there is a next content to be reproduced. For example, during the reproduction of the playlist, if it is determined that there is another content to be reproduced next to the content which is completely reproduced, the process proceeds to step S1 and processes subsequent to step S1 will be performed. That is, reception of content reproduction data of content which will be subsequently reproduced starts and the reproduction of the content starts.

In the meantime, in step S9, if it is determined that there is no content which will be subsequently reproduced, the process proceeds to step S11.

Next, in step S7, when the user inputs a command to stop reproduction of the content through the manipulating unit 107 and the command is notified to the UI control unit 103, the UI control unit 103 determines that the reproduction of the content is ordered to stop and the process proceeds to step S10.

In step S10, the client 12 stops the reproduction of the content. Specifically, the UI control unit 103 orders the reproducing unit 104 to stop the reproduction of the content and the reproducing unit 104 stops the reproduction of the content. Further, the UI control unit 103 stops the updating of the content reproducing screen which is synchronized with the reproduction of the content.

Thereafter, the process proceeds to step S11.

In step S11, the UI control unit 103 requests to stop the transmission of the content reproduction data through the transmitting unit 109 and the network 13.

In contrast, the server 11 stops the transmission of the content reproduction data in step S56 of Fig. 13, which will be described below.

The content reproduction process ends.

### [Content delivery process]

Next, a content delivery process which is performed by the server 11 corresponding to the content reproduction process by the client 12 of Fig. 4 will be described with reference to a flowchart of Fig. 13.

In step S51, the delivery unit 37 determines whether there is a request for transmitting the content reproduction data. When the delivery unit 37 receives the request for transmitting the content reproduction data from the client 12 through the network 13 and the receiving unit 39, the process proceeds to step S52.

In step S52, the server 11 starts transmission of the content reproduction data. Specifically, the delivery unit 37 reads out the content data of the content designated by the client 12 from the content DB 51. Further, the delivery unit 37 reads the check-in information which is associated with the content designated by the client 12 from the check-in information DB 52. The delivery unit 37 starts the transmission of the content reproduction data including the read content data and check-in information to the client 12 of a requesting source of the content reproduction data through the transmitting unit 38 and the network 13.

Thereafter, the process proceeds to step S53.

In contrast, in step S51, if it is determined that there is no request for transmitting the content reproduction data, the process of step S52 is skipped and the process proceeds to step S53.

In step S53, the check-in information acquiring unit 40 determines whether the check-in information is received. When the check-in information acquiring unit 40 receives the check-in information from the client 12 through the network 13 and the receiving unit 39, the process proceeds to step S54.

In step S54, the check-in information acquiring unit 40 updates the check-in information DB 52. That is, the check-in information acquiring unit 40 stores the received check-in information in the check-in information DB 52 to update the check-in information DB 52.

Thereafter, the process proceeds to step S55.

In the meantime, in step S53, if it is determined that the check-in information is not received, the processing of step S54 is skipped and the process proceeds to step S55.

In step S55, the delivery unit 37 determines whether there is a request for stopping the transmission of the content reproduction data. When the delivery unit 37 receives the request for stopping the transmission of the content reproduction data from the client 12 through the network 13 and the receiving unit 39, the process proceeds to step S56.

In step S56, the delivery unit 37 stops the transmission of the content reproduction data to the client 12 of the requesting source.

Thereafter, the process returns to step S51 and processes which are subsequent to step S51 are performed.

In contrast, in step S55, if it is determined that there is no request for stopping the transmission of the content reproduction data, the process returns to step S51 and processes which are subsequent to step S51 are performed.

As described above, in the client 12, an arbitrary interval of the content which is being reproduced is designated to be checked-in to assign various information (the segment assignment information) to the checked-in interval (segment). By doing this, the user may assign an expression representing a subjective view of the user to an arbitrary segment in the content in addition to the entire content.

Further, in the client 12, the segment assignment information, which is assigned to the segment, may be displayed in accordance with the position of the segment in the content so as to be synchronized with the reproduction of the content. By doing this, it is possible to instinctively and accurately recognize a portion to which the segment assignment information is assigned. Accordingly, the information which is assigned to an arbitrary interval of the content by the user is accurately delivered to the user.

### [Modification of content reproducing screen]

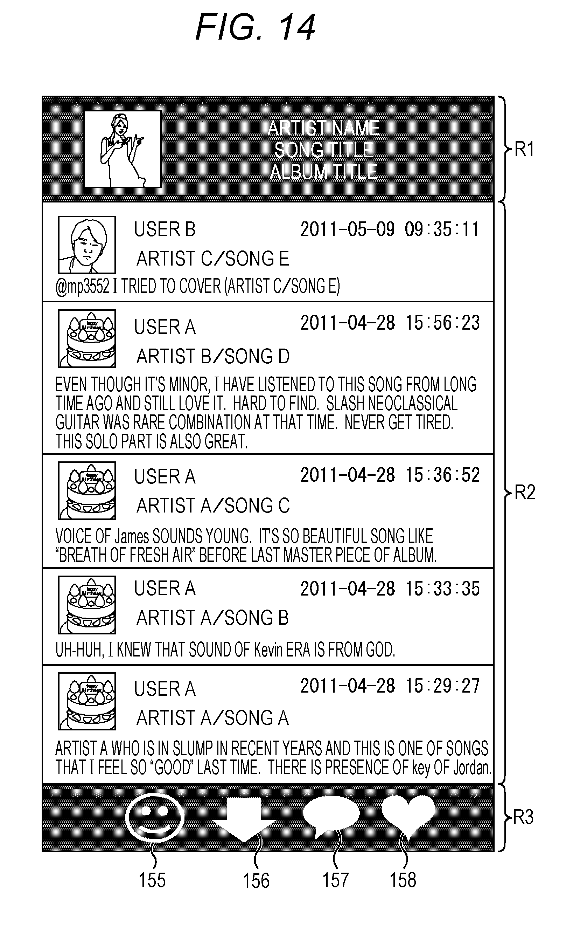

Here, a modification of the content reproducing screen in the client 12 will be described with reference to Figs. 14 to 17.

### [First modification of content reproducing screen]

For example, while displaying the content reproducing screen of Fig. 5 or 6, a content screen illustrated in Fig. 14 may be displayed by the manipulation of a user.

A content reproducing screen of Fig. 14 has the displayed contents in the region R2 which is different from those of the content reproducing screen of Fig. 5 or 6. Specifically, in the region R2, comments which are assigned to each segment of each content in the clients 12 are sequentially arranged from the latest one, regardless of the contents which are being reproduced. The client 12 sequentially receives the comments which are assigned to the segments of each content in each client 12 from the server 11 and sequentially updates the displayed contents in the region R2. That is, the latest comment is added to a section at the top of the region R2, the comment which is being displayed is downwardly scrolled, and old comment is erased.

In each section, a checking-in user name, an icon indicating the user, an artist name and music title of a checked-in content, an assigned comment, and date when the comment is assigned are displayed.

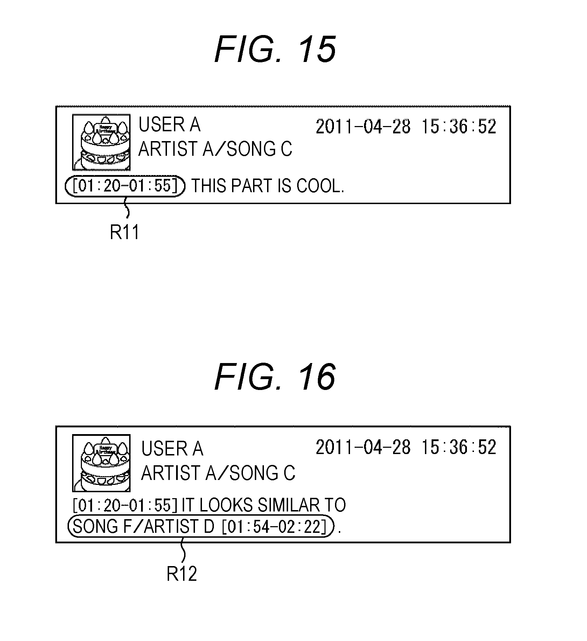

Further, when a comment is assigned to a segment in which a starting point and an ending point (check-in interval) are set, as illustrated in a region R11 enclosed by a circle of Fig. 15, a position of the content at the starting point and the ending point on the time axis is displayed.

Further, when a comment is assigned to a segment which is linked to another section, as illustrated in a region R12 enclosed by a circle of Fig. 16, a music title and an artist name of the content of the linking destination, and a position of the content at a starting point and an ending point of the segment of the linking destination on the time axis are displayed.

### [Second modification of content reproducing screen]

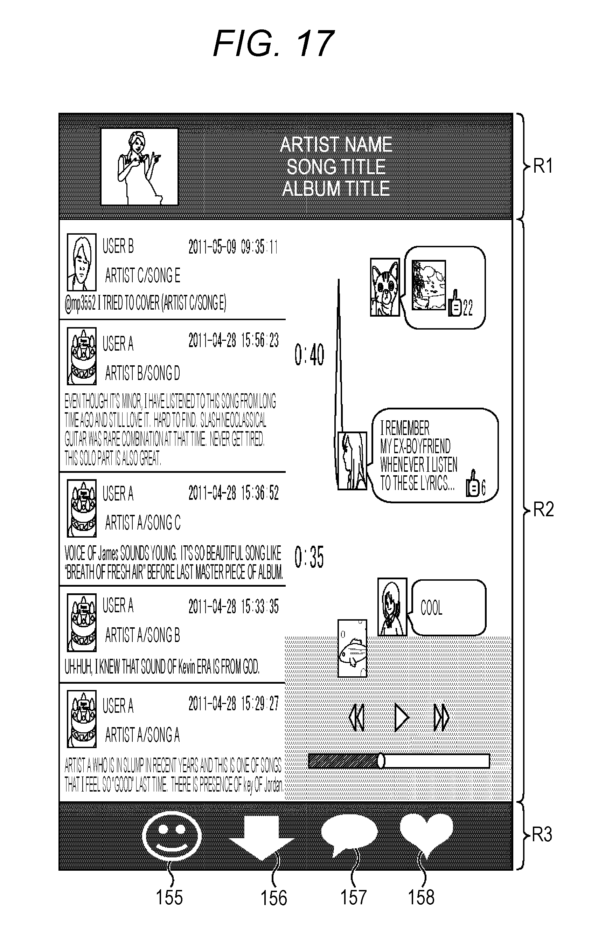

Further, while displaying the content reproducing screen of Fig. 5, 6 or Fig. 14, a content screen illustrated in Fig. 17 may be displayed by the manipulation of the user. That is, in the region R2, a screen in the region R2 of Fig. 5 and a screen in the region R2 of Fig. 14 may be displayed in parallel.

By doing this, while checking the comment which is assigned to the segment of the content which is being reproduced, the comment which is assigned to the segment of each content in each client 12 may be checked-in real time.

Further, in the region R2 of Fig. 17, the screen in the region R2 of Fig. 6 may be displayed instead of the screen in the region R2 of Fig. 5.

Further, when the display unit 105 has a plurality of screens, the content reproducing screen of Fig. 5 or 6 and the content reproducing screen of Fig. 14 may be displayed in separate screens.

### [Recommendation process by the information processing system 1]

Next, a content recommendation process which is performed by the information processing system 1 will be described.

In the information processing system 1, the content may be recommended in the unit of segment based on each segment of the content to which the user checks-in and the segment assignment information which is assigned to each segment. Hereinafter a specific example of the recommendation process by the information processing system 1 will be described.

### [Segment recommendation process using CF]

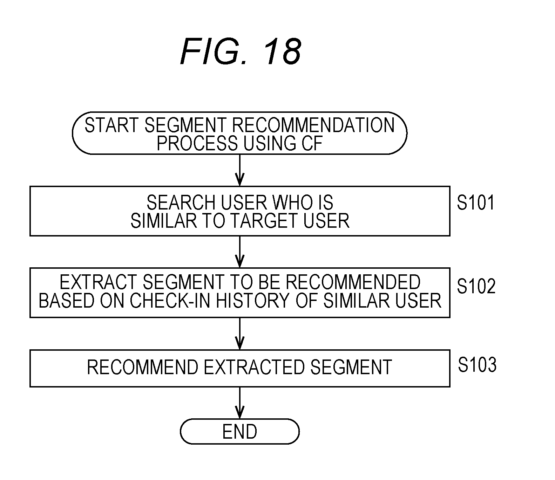

First, a segment recommendation process using CF (collaborative filtering) which is performed by the server 11 will be described with reference to a flowchart of Fig. 18.

Hereinafter, a user who serves as an object to which the segment is recommended is referred to as a target user.

In step S101, the user analyzing unit 62 searches a user which is similar to the target user. For example, the user analyzing unit 62 uses the check-in information DB 52 to search a user who has a similar tendency of the checked-in segment to the target user. The user analyzing unit 62 notifies a searching result to the segment extracting unit 71.

Further, a method that searches a user who has a checked-in segment similar to the target user is not specifically limited and thus an arbitrary method may be used.

In step S102, the segment extracting unit 71 extracts a segment to be recommended based on a check-in history of the similar user. Specifically, the segment extracting unit 71 extracts a history of the segments which have been checked-in by the similar user in the past from the check-in information DB 52. The segment extracting unit 71 extracts a segment which is not checked-in by the target user, among the segments which have been checked-in by the similar user in the past, as a segment to be recommended.

In step S103, the segment recommending unit 72 recommends the extracted segment. Specifically, the segment recommending unit 72 generates segment recommendation information including information on the segment extracted by the segment extracting unit 71 and a recommendation reason using the content DB 51 or the check-in information DB 52. The segment recommending unit 72 transmits the generated segment recommendation information to the client 12 of the target user through the transmitting unit 38 and the network 13.

The UI control unit 103 of the client 12 of the target user receives the segment recommendation information through the receiving unit 101. The UI control unit 103 displays a screen through which the segment is recommended to the target user on the display unit 105 based on the segment recommendation information. For example, a position of the segment in the content or the recommendation reason thereof are represented together with a content name, an artist name, an album title, and an album cover of the content to which the segment to be recommended belongs.

Further, if the position of the segment is accurately delivered to the user, a method that represents the position of the segment in the content is not specifically limited. For example, a time of the segment on the time axis of the content, the song structure corresponding to the segment (for example, a verse or a bridge), and lyrics included in the segment are used to indicate the position of the segment in the content.

Further, as the recommendation reason, for example, a sentence saying that "a user who checks-in this portion also checks-in this portion" or "a user who is similar to you also checks-in this portion of this song" may be displayed.

Therefore, for example, the target user designates the recommended segment to reproduce the designated segment.

By doing this, the content may be recommended to the user in the unit of segment. That is, using CF, it is possible to recommend a segment group which is personalized in accordance with the preference of each user. Accordingly, it is possible to more delicately and appropriately recommend (a segment of) the content in accordance with the preference of the user. For example, even though the content does not accord with the preference of the user as a whole, only a part in the content which accords with the preference of the user is extracted and then recommended. Further, the user may easily enjoy the part in the content which accords with the preference of himself/herself.

### [Playlist generation process using CF]

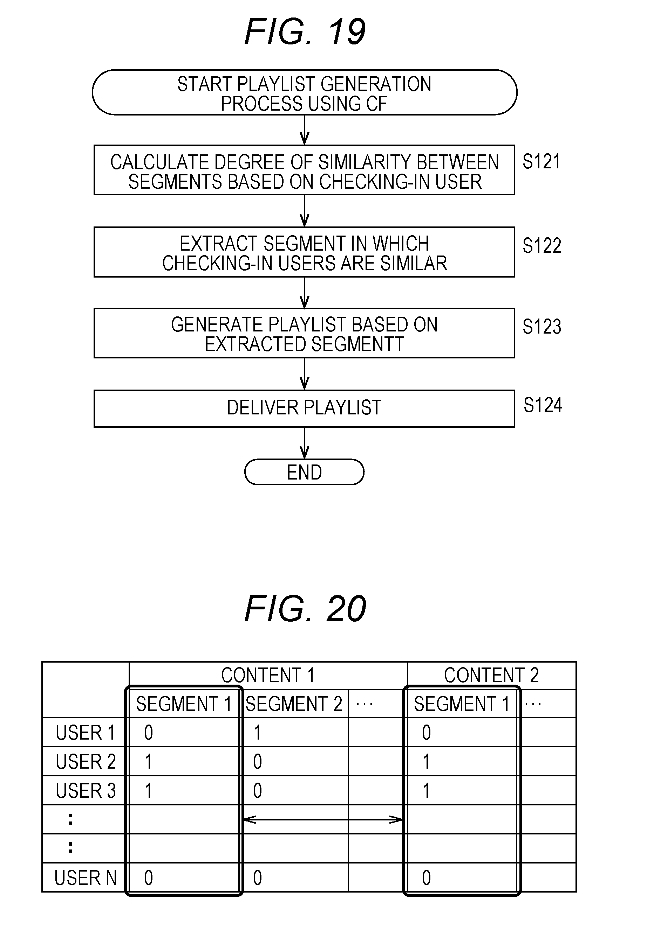

Next, a playlist generation process using CF (collaborative filtering) which is performed by the server 11 will be described with reference to a flowchart of Fig. 19.

In step S121, the segment analyzing unit 61 calculates a degree of similarity between the segments based on the checking-in user, using the check-in information DB 52.

Specifically, the segment analyzing unit 61, as illustrated in Fig. 20, obtains statistics of the users who check-in each segment of each content. This example illustrates a user 2 and a user 3 check-in a segment 1 of the content 1 and the user 1 checks-in a segment 2.

The segment analyzing unit 61 calculates the degree of similarity between segments based on the user who checks-in each segment.

For example, in the example of Fig. 20, it is described that the user 2 is a target user and a segment is extracted based on the segment 1 of the content 1 to which the user 2 checks-in.

In this case, when the user who checks-in the segment 1 of the content 1 is compared with a user who checks-in another segment, the degree of similarity between the segments is calculated. In this example, the user which checks-in the segment 1 of the content 1 is the same as the user who checks-in the segment 1 of the content 2 so that the degree of similarity between segments is high.

The segment analyzing unit 61 notifies the degree of similarity between segments to the recommending unit 35.

In step S122, the segment extracting unit 71 extracts a segment to which similar users check-in. That is, the segment extracting unit 71 extracts a segment having a degree of similarity with a reference segment (for example, the segment 1 of the content 1 of Fig. 20) which is equal to or higher than a predetermined threshold value.

In step S123, the playlist generating unit 73 generates a playlist based on the extracted segment. For example, the playlist generating unit 73 arranges the extracted segments in a predetermined order and generates playlist information in which information on each segment is listed using the content DB 51 or the check-in information DB 52. Further, the information on each segment includes information indicating a content name, an artist name, and an album title of a content to which each segment belongs, and a position in the content of the segment.

In step S124, the playlist generating unit 73 delivers the playlist. Specifically, the playlist generating unit 73 transmits the generated playlist information to the client 12 of the target user through the transmitting unit 38 and the network 13.

The UI control unit 103 of the client 12 of the target user receives the playlist information through the receiving unit 101. The UI control unit 103 displays, for example, a list of the segments included in the playlist on the display unit 105 based on the playlist information.

The target user orders to reproduce the presented playlist to sequentially reproduce the segments registered in the playlist.

As described above, it is possible to generate and deliver a playlist formed of a segment group personalized in accordance with the preferences of the users, using the CF.

For example, a playlist may be generated and delivered by gathering segments to which similar users check-in without limiting the target users.

Further, for example, a playlist formed of only segments to which the target user checks-in may be generated and delivered. By doing this, digest reproduction for only a part (for example, a chorus part) of content to which the target user checks-in may be easily performed.

### [Segment recommendation process using CBF]

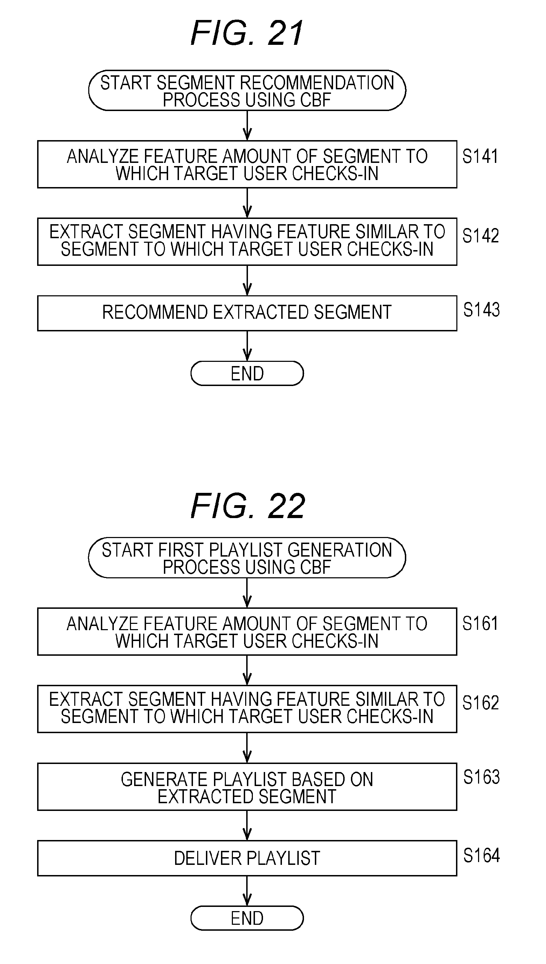

Next, a segment recommendation process using CBF (content based filtering) which is performed by the server 11 will be described with reference to a flowchart of Fig. 21.

In step S141, the segment analyzing unit 61 analyzes a feature amount of the segment to which the target user checks-in. Specifically, the segment analyzing unit 61 extracts past check-in histories of the target user from the check-in information DB 52. Further, the segment analyzing unit 61 extracts the feature amount of the segment to which the target user checks-in from the content DB 51 based on the extracted check-in history of the target user.

Further, the segment analyzing unit 61 extracts a distinctive feature amount, for example, a chord progression or lyrics having a high appearance frequency from the feature amount of the segments to which the target user checks-in. The segment analyzing unit 61 notifies the extracted feature amount to the recommending unit 35.

In step S142, the segment extracting unit 71 extracts a segment which has a similar feature to the segment to which the target user checks-in. For example, the segment extracting unit 71 extracts a segment having a feature amount having a degree of similarity with the feature amount extracted by the segment analyzing unit 61 which is equal to or higher than a predetermined threshold value from the content DB 51.

In step S143, similarly to the process of step S101 of Fig. 18, the extracted segment is recommended.

By doing this, it is possible to recommend a segment group which is personalized in accordance with the preferences of individual users, using the CBF.

### [First playlist generation process using CBF]

Next, a first embodiment of the playlist generation process using the CBF which is performed by the server 11 will be described with reference to a flowchart of Fig. 22.

In step S161, similarly to the process of step S141 of Fig. 21, a feature amount of the segment to which the target user checks-in is analyzed.

In step S162, similarly to the process of step S142 of Fig. 21, a segment having a feature similar to the feature of the segment to which the target user checks-in is extracted.

In step S163, similarly to the process of step S123 of Fig. 19, a playlist is generated based on the extracted segment.

In step S164, similarly to the process of step S124 of Fig. 19, the playlist is delivered.

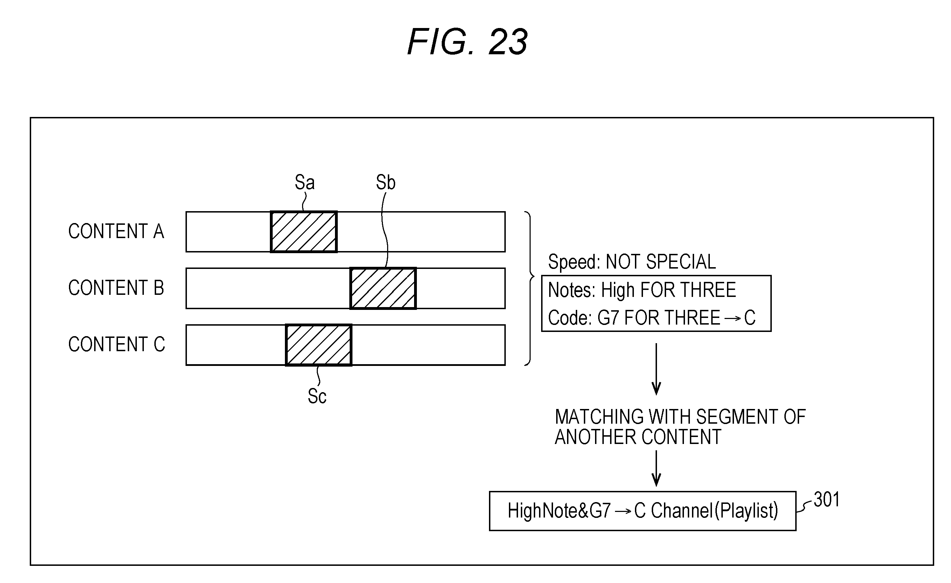

Here, referring to Fig. 23, a specific example of the playlist generated in the process of Fig. 22 will be described.

For example, feature amounts of the segments Sa to Sc of the contents A to C to which the target user checked-in in the past are analyzed. As a result, it is assumed that features in that the segments Sa to Sc are treble parts, the chord progression thereof is changed from G7 to C, but a tempo of the song is not common in the segments are detected.

In this case, for a different content as the target, a segment in which the chord progression in the treble part is changed from G7 to C is extracted and a playlist formed of the extracted segment is generated.

For example, in the client 12 of the target user, a button 301 indicating a playlist (channel) formed of a segment in which the chord progression in the treble part is changed from G7 to C is displayed. The target user may press the button 301 to sequentially replay the segment included in the playlist.

By doing this, using the CBF, the playlist formed of the segment group which is personalized in accordance with the preferences of individual users may be generated and delivered.

Further, generally, even the same user may like different types of contents such as a rhythmical cheerful music or a comfortable ballad music so that the feature mounts of the checked-in segment may be widely variety.

In step S161, the feature amount obtained by the segment analyzing unit 61 is clustered based on the degree of similarity between the feature amounts and a playlist is generated and delivered for every obtained feature amount group. By doing this, a plurality of playlists having different features may be generated and delivered.

### [Second playlist generation process using CBF]

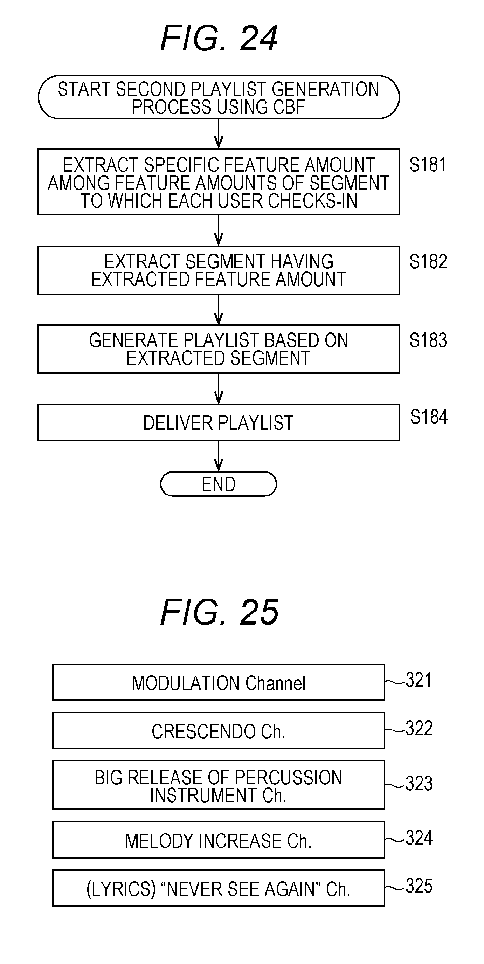

Next, a second embodiment of the playlist generation process using the CBF which is performed by the server 11 will be described with reference to a flowchart of Fig. 24.

In step S181, the segment analyzing unit 61 extracts a specific feature amount among the feature amounts of the segments to which the users check-in. Specifically, the segment analyzing unit 61 extracts the past check-in histories of the users from the check-in information DB 52. Further, the segment analyzing unit 61 extracts the feature amount of each segment to which each user checks-in from the content DB 51 based on the extracted check-in history of each user.

Further, the segment analyzing unit 61 extracts a specific feature amount from a set of all extracted feature amounts of the segments, for example, a predetermined number of feature amounts having a high appearance frequency. The segment analyzing unit 61 notifies the extracted feature amount to the recommending unit 35.

In step S182, the segment extracting unit 71 extracts a segment having a feature amount extracted by the segment analyzing unit 61 from the content DB 51.

In this case, only a segment to which one or more users checked-in in the past may be an extracting target or a segment to which no user has checked-in yet may be also included in the extracting target. Further, in the latter case, a segment of the content immediately after being released may be included as the extracting target.

In step S183, the playlist generating unit 73 generates a playlist based on the extracted segment. Specifically, the playlist generating unit 73 classifies the segment extracted by the segment extracting unit 71 for every feature amount which becomes an extraction condition. The playlist generating unit 73 arranges the segments in a predetermined order for every classified group using such as the content DB 51 or the check-in information DB 52 and generates playlist information in which information on the segments is listed. Further, the playlist generating unit 73 assigns a name to the playlist based on the feature amount corresponding to the playlist.

In step S184, similarly to the process of step S124 of Fig. 19, the playlist is delivered.

The UI control unit 103 of the client 12 of the delivery destination receives the playlist information through the receiving unit 101. The UI control unit 103 displays a list of the playlists on the display unit 105 based on the received playlist information.

Fig. 25 illustrates an example of a list of the playlists displayed in this case. In this example, the buttons 321 to 325 are associated with different playlists respectively and names of the playlists corresponding to the buttons are displayed.

For example, a playlist corresponding to the button 321 has a name of modulation channel and includes a segment group including a modulated part of the content.

A playlist corresponding to the button 322 has a name of crescendo Ch. and includes a segment group including a part in which a sound of the content is gradually increased.

A playlist corresponding to the button 323 has a name of big release of percussion instrument Ch. and includes a segment group including a part of the content in which the percussion instrument is largely released.

The playlist corresponding to the button 324 has a name of a melody increase Ch. and includes a segment group including a part of the content in which the melody is increased.

The playlist corresponding to the button 325 has a name of (lyrics) "never see again" Ch. and includes a segment group including a part of the content having the lyrics expressing that "never see again".

For example, the user selects any one of the buttons 321 to 325 to replay the playlist corresponding to the selected button.

Further, in this case, based on the appearance frequency of the feature amount, rankings may be assigned to the playlists. For example, a playlist which is generated based on the feature amount having the highest appearance frequency is ranked as a first place and then the playlists are arranged in the descending order of the appearance frequency of the corresponding feature amount to present the playlist to the user.

By doing this, using the CBF, a playlist including the segment group having a feature amount which is preferred by a large number of users may be generated and delivered.

### [Segment recommendation process using comment assigned to segment]

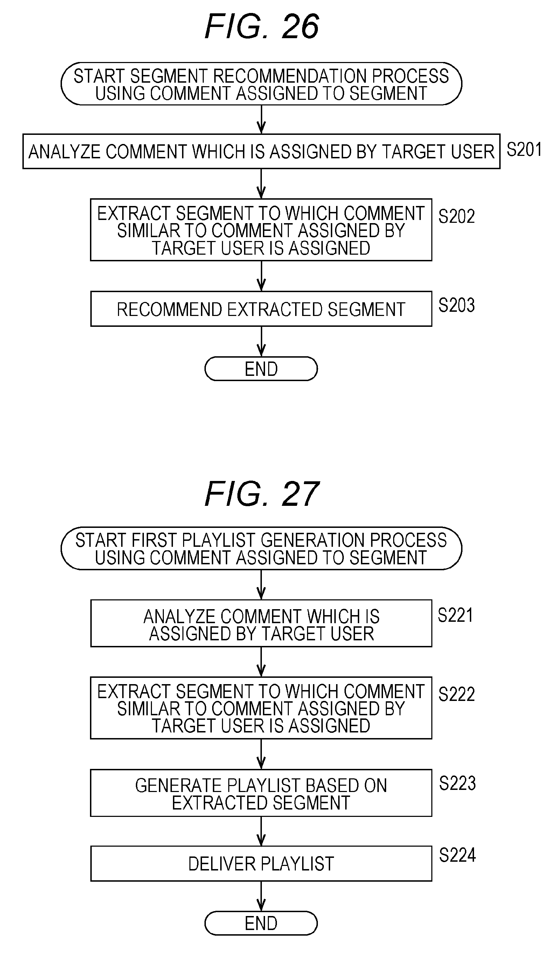

Next, a segment recommendation process using a comment (that is, text data) assigned to a segment which is performed by the server 11 will be described with reference a flowchart of Fig. 26.

In step S201, the assignment information analyzing unit 63 analyzes the comment which is assigned by the target user. The assignment information analyzing unit 63 notifies an analysis result to the recommending unit 35.

For example, when the target user checks-in the segment of the content which is being replayed and assigns the comment, the assignment information analyzing unit 63 analyzes the comment and extracts a characteristic phrase (for example, a phrase which clearly represents a characteristic of the segment). The assignment information analyzing unit 63 notifies the extracted phrase to the recommending unit 35.

Alternatively, the assignment information analyzing unit 63 extracts the comment which was assigned to the segment by the target user in the past from the check-in information DB 52. The assignment information analyzing unit 63 analyzes the extracted comment and extracts a characteristic phrase (for example, a phrase having a high appearance frequency). The assignment information analyzing unit 63 notifies the extracted phrase to the recommending unit 35.

In step S202, the segment extracting unit 71 extracts the segment to which a comment similar to the comment assigned by the target user is assigned based on the analysis result by the assignment information analyzing unit 63.

For example, the segment extracting unit 71 extracts a segment to which a comment including a phrase extracted by the analyzing unit 32 is assigned from the check-in information DB 52. In this case, for example, the synonym dictionary 54 is used to extend an extracting range to a segment to which a comment including a phrase similar to the extracted phrase is assigned.

In step S203, similarly to the process of step S103 of Fig. 18, the extracted segment is recommended.

By doing this, a segment to which a comment similar to the comment assigned by the target user is assigned by different user is recommended to the target user. By doing this, for example, a segment having evaluation or feedback which is same as the evaluation or feedback which is assigned to a segment by the target user may be recommended to the target user.

### [First playlist generation process using comment assigned to segment]

Next, a first embodiment of a playlist generation process using a comment assigned to a segment, which is performed by the server 11 will be described with reference to a flowchart of Fig. 27.

In step S221, similarly to the process of step S201 of Fig. 26, a comment which is assigned by the target user is analyzed.

In step S222, similarly to the process of step S202 of Fig. 26, a segment to which a comment similar to the comment assigned by the target user is assigned is extracted.

In step S223, similarly to the process of step S123 of Fig. 19, a playlist is generated based on the extracted segment.

In step S224, similarly to the process of step S124 of Fig. 19, the playlist is delivered.

Further, in this case, a phrase extracted from the comment of the target user is used to add a name of the playlist. For example, when a phrase "fresh" is extracted, a playlist name such as "fresh channel" may be assigned.

Further, the segment extracted in the process of step S222 is classified based on the feature amount of the segment and a plurality of playlists may be generated for every segment having a similar feature amount. In this case, a phrase extracted from the comment of the target user and the feature amount are combined and the combined name is assigned as the name of the playlist. For example, when a segment extracted using a phrase of "fresh" is classified based on a tempo of the music to generate a playlist, a playlist name such as "fresh & slow channel" or "fresh & fast channel" may be assigned.

By doing this, a playlist including a segment group to which a comment similar to the comment assigned by the target user is assigned by a different user may be generated to be presented.

### [Second playlist generation process using comment assigned to segment]

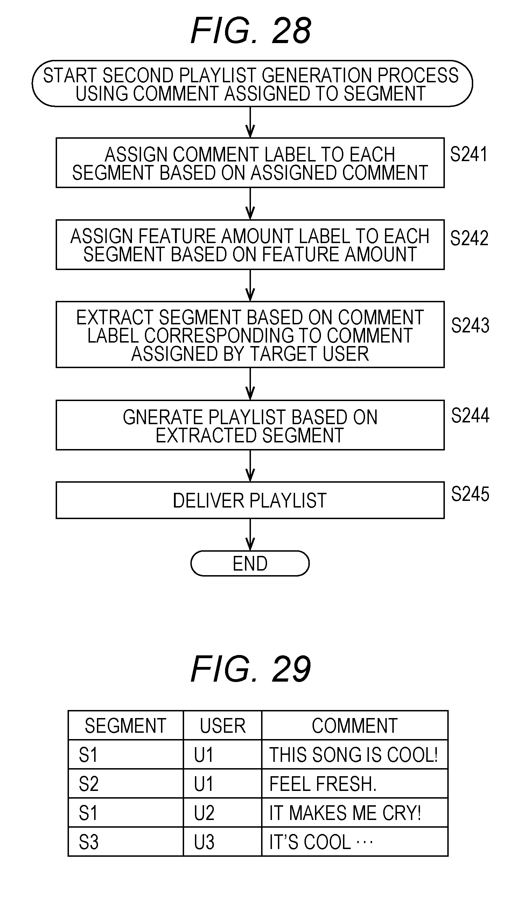

Next, a second embodiment of a playlist generation process using a comment assigned to a segment, which is performed by the server 11 will be described with reference to a flowchart of Fig. 28.

In step S241, the comment label determining unit 33 assigns a comment label to each segment based on the assigned comment. Specifically, the comment label determining unit 33 extracts a segment to which comment is assigned from the check-in information DB 52. The comment label determining unit 33 generates a table (hereinafter, referred to as a comment table) indicating a relationship among the extracted segment, a user who assigns a comment, and an assigned comment.

Fig. 29 illustrates an example of the comment table. In this example, comments are assigned to segments S1 to S3 by users U1 to U3. For example, a comment expressing that "this song is cool!" is assigned to the segment S1 by a user U1.

Next, the comment label determining unit 33 selects a most suitable label to the comment which is assigned to the segment from the labels stored in the label DB 55. The comment label determining unit 33 replaces each comment of the comment table with the selected label.

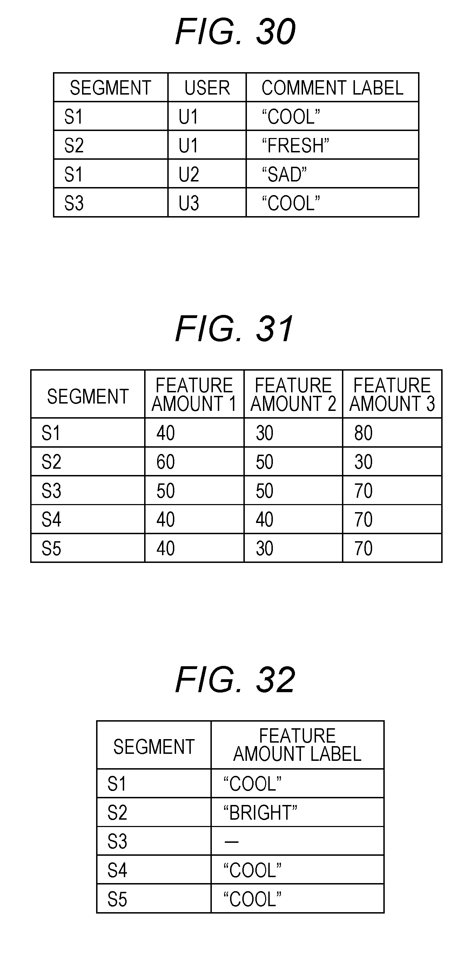

Fig. 30 illustrates an example after the comments of the comment table of Fig. 29 is replaced with the comment label. For example, the comment expressing that "this song is cool" which is assigned to the segment S1 by the user U1, is replaced with the comment label of "cool". Further, a comment expressing that "it's cool..." which is assigned to the segment S3 by the user U3 is also replaced with the comment label of "cool".

When the comment is freely input, even though respective users have the same subjective view for the segment, the expression of the comment to be assigned may vary. The comment is replaced with the comment label by the comment label determinator 33 so that the expression of the comment varies but similar subjective view of the user may be aggregated.

Further, respective users may freely assign different comments to the same segment so that like the segment S1 of Fig. 30, different comment labels may be assigned to the same segment.

The comment label determining unit 33 supplies the comment table which replaces the comment with the comment label to the recommending unit 35.

In step S242, the feature amount label determining unit 34 assigns a feature amount label to each segment based on the feature amount. Specifically, the feature amount label determining unit 34 generates a table (hereinafter, referred to as a feature amount table) indicating the relationship between the respective segments and the feature amount using the content DB 51 and the check-in information DB 52.

Fig. 31 illustrates an example of the feature amount table. Further, Fig. 31 illustrates an example that feature amounts 1 to 3 are extracted from the segments S1 to S5.

Next, the feature amount label determining unit 34 selects a label which is the most suitable for the feature amounts of respective segments from the labels stored in the label DB 55. The feature amount label determining unit 34 replaces the feature amount of the feature amount table with the selected label (feature amount label).

Fig. 32 illustrates an example after replacing the feature amount of the feature amount table of Fig. 31 with the feature amount label. For example, the feature amount of the segment S1 is replaced with a feature amount label of "cool".

As described above, the feature amount label is selected from candidates of the same types of labels using the label DB 55, similarly to the comment label and then assigned to the respective segments. However, the comment label which is assigned to the same segment and the feature amount label are not necessarily identical to each other.

The feature amount label determining unit 34 supplies the feature table obtained after replacing the feature amount with the feature amount label, to the recommending unit 35.

In step S243, the segment extracting unit 71 extracts the segment based on the comment label corresponding to the comment assigned by the target user.

Here, using the examples of Figs. 29 to 32, a case when the segment is extracted based on the comment label "cool" corresponding to the comment saying that "this song is cool!" which is assigned to the segment S1 by the user U1 will be described.

First, the segment extracting unit 71 extracts a segment to which a comment label saying that "cool" or a feature amount label is assigned from the comment table and the feature amount table. As a result, the segment S3 is extracted from the comment table and the segments S4 and S5 are extracted from the feature amount table.

Further, the segment extracting unit 71 extracts a segment (for example, a segment having a degree of similarity of the feature amount with the segment S1 is equal to or higher than a predetermined value) similar to the segment S1 from the extracted segments.

In step S244, similarly to the process of step S123 of Fig. 19, the playlist is generated based on the extracted segment.

In step S245, similarly to the process of step S124 of Fig. 19, the playlist is delivered.

By doing this, a playlist having a segment to which a comment similar to the assigned comment is assigned and a segment group having a characteristic represented by the assigned comment may be generated and delivered, based on the comment assigned by the target user.

Further, when the playlist is presented in the client 12, for example, the segment extracted based on the comment label may be presented together with an original comment and information on a user who assigns the comment.

Further, when the segment is extracted based on the comment label, for example, only a comment label corresponding to a comment which is assigned by a user similar to the target user may be used. Here, the similar user refers to a user who has evaluation tendency of the segment and assignment tendency of the comment, and replaying history of the segment similar to those of the target user.

### [Segment recommendation process by ranking]

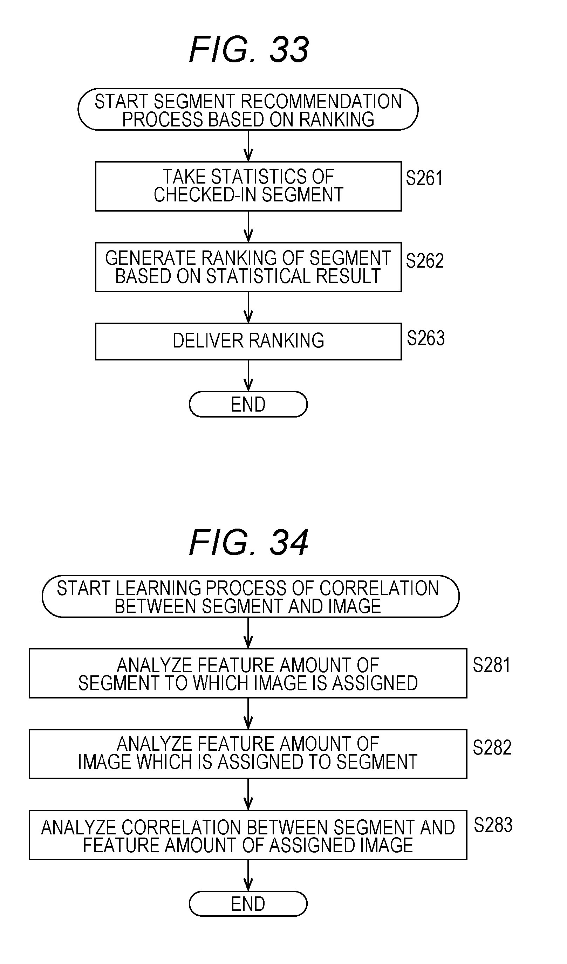

Next, a segment recommendation process based on a ranking which is performed by the server 11 will be described with reference to a flowchart of Fig. 33.

In step S261, the statistic analyzing unit 65 takes statistics of the checked-in segment using the check-in information DB 52.

In step S262, the statistic analyzing unit 65 generates a ranking of the segment based on a statistical result. That is, the statistic analyzing unit 65 arranges the segments in the descending order of the number of checking-in users to determine a ranking of the segments.

In this case, the ranking may be determined for every genre of the content to which the segment belongs.

Alternatively, the ranking may be determined for every context. For example, the raking may be determined for every location or region where the check-in is performed or the raking may be determined for every period of time when the check-in is performed.

Further, the ranking may be determined for a region, an age, or a nationality of a checking-in user.

The statistic analyzing unit 65 supplies information indicating the generated ranking to the recommending unit 35.

In step S263, the segment recommending unit 72 delivers the ranking. Specifically, the segment recommending unit 72 generates ranking information including information on highly ranked segment which is generated by the statistic analyzing unit 65 using the content DB 51 or the check-in information DB 52. The segment recommending unit 72 transmits the generated ranking information to the client 12 through the transmitting unit 38 and the network 13.

The UI control unit 103 of the client 12 which is a delivery destination receives the ranking information through the receiving unit 101. The UI control unit 103 displays the ranking information on the display unit 105.

By doing this, it is possible to recommend a popular segment which has been checked-in by lots of users, to a user.

### [Process related with slide-show]

Next, a process related with a slide-show which is performed by the server 11 will be described with reference to Figs. 34 to 36.

### [Learning process of correlation between segment and image]

First, a learning process of a correlation between a segment and an image will be described with reference to a flowchart of Fig. 34.

In step S281, the segment analyzing unit 61 analyzes a feature amount of a segment to which an image is assigned. Specifically, the segment analyzing unit 61 extracts the segment to which an image is assigned, from the check-in information DB 52. The segment analyzing unit 61 analyzes a feature amount of each of the extracted segments using the content DB 51.

Here, a type or a number of feature amounts to be analyzed may be arbitrarily set.

In step S282, the assignment information analyzing unit 63 analyzes a feature amount of an image which is assigned to a segment. Specifically, the assignment information analyzing unit 63 extracts the image which is assigned to the segment extracted in step S281 from the check-in information DB 52 and analyzes a feature amount of the extracted image.

Here, a type and a number of feature amounts to be analyzed may be arbitrarily set. For example, a low level feature amount such as a color or a texture of the image is analyzed or a high level feature amount such as an object in the image, or the feature amount thereof may be analyzed using object recognition or the like.

In step S283, the correlation analyzing unit 64 analyzes a correlation between the segment and the feature amount of the assigned image. That is, the correlation analyzing unit 64 analyzes the correlation between a feature amount of the segment to which an image is assigned and a feature amount of the assigned image based on the analysis result of the segment analyzing unit 61 and the assignment information analyzing unit 63. The correlation analyzing unit 64 stores the obtained analysis result in the storage device 56.

### [First embodiment of slide-show generation process]

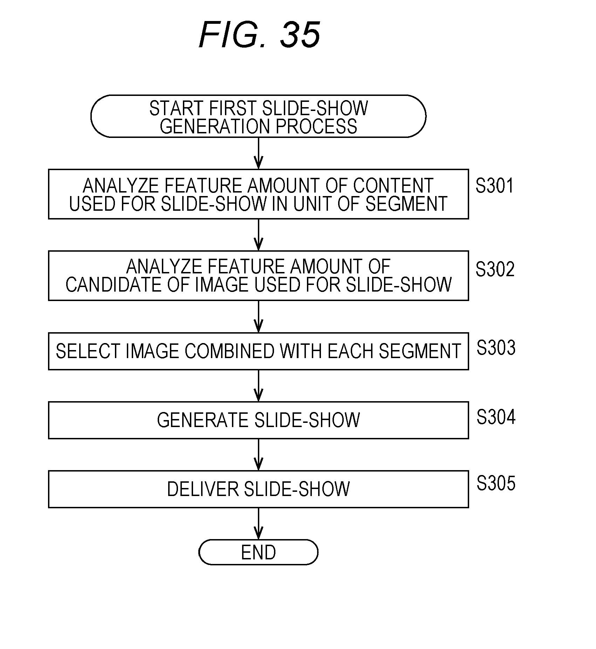

Next, a first embodiment of a slide-show generation process which is performed by the server 11 will be described with reference to a flowchart of Fig. 35. In this process, an image is allocated to a designated content (music) to generate a slide-show. That is, a slide-show in which an image is sequentially switched in accordance with the reproduction of the designated content is generated.

In step S301, the server 11 analyzes the feature amount of the content, which is used for the slide-show, in the unit of segment.

For example, the client 12 transmits information indicating content which is a generation target of the slide-show and a candidate of an image which is used for the slide-show to the server 11 through the network 13 and requests the server 11 to deliver the slide-show.

The delivery unit 37 receives information transmitted from the client 12 through the receiving unit 39, supplies the received information to the slide-show generating unit 36, and orders the slide-show generating unit 36 to generate a slide-show. The slide-show generating unit 36 orders the segment analyzing unit 61 to analyze the feature amount of the content which is used for the slide-show.

The segment analyzing unit 61 obtains the content data which is used for the slide-show from the content DB 51 and disassembles the content data into a predetermined unit (for example, in the unit of bar or in the unit of musical structure) of segments. The segment analyzing unit 61 analyzes the feature amounts of the respective segments and notifies the analysis result to the slide-show generating unit 36.

In step S302, the server 11 analyzes the feature amount of a candidate of the image which is used for the slide-show. Specifically, the slide-show generating unit 36 orders the assignment information analyzing unit 63 to analyze the feature amount of the candidate of the image which is used for the slide-show. The assignment information analyzing unit 63 reads the candidate of the image which is used for the slide-show from the check-in information DB 52 or the storage device 56 and analyzes the feature amount of each of the images. The assignment information analyzing unit 63 notifies the analysis result to the slide-show generating unit 36.

In step S303, the slide-show generating unit 36 selects an image to be combined with the segment. Specifically, the slide-show generating unit 36 reads the analysis result of the correlation between the segment and the feature amount of the image from the storage device 56.

The slide-show generating unit 36 selects an image which is displayed during the reproduction of each of the segments of the content to be used for the slide-show, from the candidates of the image for the slide-show, based on the obtained analysis result. For example, the slide-show generating unit 36 selects an image which is the most correlated with the segment of the content to be used for the slide-show from the candidates of the image for the slide-show.

In step S304, the slide-show generating unit 36 generates the slide-show. Specifically, the slide-show generating unit 36 sets a reproducing order and a reproducing time of the image which is combined with the segments based on the order and the reproducing time of each segments. The slide-show generating unit 36 generates the content data and the image which are used for the slide-show, and slide-show data including information indicating the reproducing order and the reproducing time for each image. The slide-show generating unit 36 supplies the generated slide-show data to the delivery unit 37.

In step S305, the delivery unit 37 delivers the slide-show. That is, the delivery unit 37 transmits the slide-show data to the client 12 of a requesting source, through the transmitting unit 38 and the network 13.

The receiving unit 101 of the client 12 of requesting source receives the slide-show data, supplies the content data which is included in the received slide-show data to the reproducing unit 104, and supplies the remains to the UI control unit 103.

The reproducing unit 104 starts the reproduction of the content data and causes a voice obtained as a result of the reproduction to output from the voice output unit 106. Further, the UI control unit 103 causes each image included in the slide-show data to display on the display unit 105 by being synchronized with the reproduction of each segment of the content.

The received slide-show data may be stored in the storing unit 102 without immediately reproducing the slide-show.

By doing this, for example, the image which is suitable for the segment in the content may be sequentially displayed in accordance with the reproduction of the content. By doing this, the user may enjoy landscape photograph suitable for the segments of the content while listening to the content (music).

Further, when a time of each segment is short, it is assumed that the image is frequently changed and the user feels strangeness or uncomfortable feeling. In order to prevent the strangeness or the uncomfortable feeling, a degree of similarity of the feature amounts between adjacent segments is calculated and segments having a degree of similarity which exceeds a predetermined threshold value may be combined into one segment.

Further, when the candidates of the content or the image which are used for the slide-show are determined in advance, the feature amounts thereof are analyzed in advance, processes of step S301 and S302 may not be provided. Alternatively, the analysis results of step S281 and S282 of Fig. 34 may be used. By doing this, the slide show is more rapidly delivered and convenience of the user is improved.

### [Second embodiment of slide-show generation process]

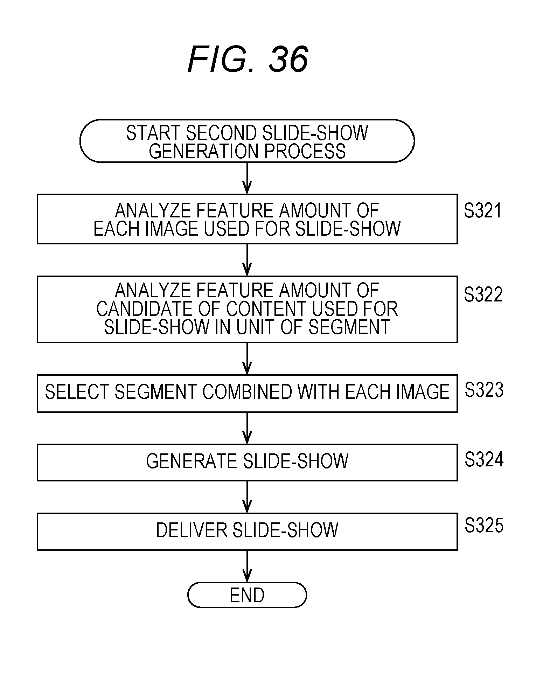

Next, a second embodiment of a slide-show generation process which is performed by the server 11 will be described with reference to a flowchart of Fig. 36. Further, in this process, segments of content are allocated to images of a group including a plurality of images so that the slide-show is generated. That is, a slide-show which sequentially reproduces the plurality of images together with BGM is generated.

In step S321, the server 11 analyzes the feature amount of each of the images which is used for the slide-show.

For example, the client 12 transmits information indicating a plurality of images which are generating targets of the slide-show, a displaying order, and a candidate of the content used for the slide-show to the server 11 through the network 13 and requests the server 11 to deliver the slide-show. In this case, the client 12 designates the displaying time of each of the images.

The delivery unit 37 receives information transmitted from the client 12 through the receiving unit 39 and supplies the received information to the slide-show generating unit 36. The slide-show generating unit 36 orders the assignment information analyzing unit 63 to analyze the feature amount of each of the images used for the slide-show.

The assignment information analyzing unit 63 analyzes the feature amount of each of the images used for the slide-show and notifies the analysis result to the slide-show generating unit 36.

In step S322, similarly to the process of step S301 of Fig. 35, the feature amount of the candidate of the content used for the slide-show is analyzed in the unit of segment. The analysis result is notified to the slide-show generating unit 36 by the segment analyzing unit 61.

In step S323, the slide-show generating unit 36 selects the segment which is combined into the images. Specifically, the slide-show generating unit 36 reads the analysis result of the correlation between the segment and the feature amount of the image from the storage device 56.

The slide-show generating unit 36 selects a segment which may be reproduced while displaying each of the images to be used for the slide-show from the segments of the candidate of the content for the slide-show, based on the obtained analysis result. For example, the slide-show generating unit 36 selects a segment which is the most correlated with the image to be used for the slide show, among the segments of the candidates of the contents for the slide-show.

Further, when the image is switched, in order to prevent an ambience of the contents from changing significantly, and to prevent strangeness or uncomfortable feeling from being transferred to the user, for example, a segment which is highly correlated with not only the target image but also the adjacent image may be selected.

Further, when the ambience of the BGM is wanted to be consistent, for example, one content which is highly correlated with all of the images rather than the unit of segment may be selected.

Further, when the displaying time of each image is designated and the displaying time is long so that a plurality of segments are allocated to one image, a plurality of segments having similar feature amount may be selected to be allocated so that the ambience of the BGM is not changed in midstream.

In step S324, the slide-show generating unit 36 generates the slide-show. Specifically, when the displaying time of the image is not designated, the slide-show generating unit 36 sets a reproducing time of the segment which is allocated to the images as the reproducing time.

The slide-show generating unit 36 generates an image and a segment used for the slide-show, a reproducing order and a displaying time of the image, and slide-show data including information indicating the reproducing order of each segment. The slide-show generating unit 36 supplies the generated slide-show data to the delivery unit 37.

In step S325, similarly to the process of step S305 of Fig. 35, the slide-show is delivered. For example, the client 12 of the requesting source reproduces the slide-show or stores the slide-show data.

When the slide-show is reproduced, fade-in, fade-out, or cross fade may be performed at the time of switching the segment so that each segments is naturally connected and heard.

By doing this, in accordance with the displaying of the image, segments which are suitable for the images may be sequentially reproduced. By doing this, when the slide-show is created using photographs which is taken during travel or taken photographs are sequentially reproduced by a digital photo frame, a BGM which is appropriate for the ambience of for each photograph may be simply applied.

Further, by the same process, the BGM may be applied to the moving image. For example, correlation between the feature amount for a scene of some of the moving images and the feature amount of the segment of the content is analyzed. The scene of the moving image to which the BGM is assigned is set to be automatically or manually changed and the segment may be allocated to every scene, similarly to the above-described process.

By doing this, the user checks-in an arbitrary segment of the content and assigns information such as a comment or a file to the checked-in segment.

Further, based on the preference for each of the segments of the user, the content is recommended in the unit of segment or the playlist or the slide-show may be delivered. Accordingly, the user may find a preferable segment from an unknown type of the contents or hateful type of contents. Further, the user may enjoy a difference of the impression between the different segments in the same content or a difference of characteristics between the segments of the contents of the same genre.

### <2. Modifications>

Hereinafter, modifications of the embodiment of this technology will be described.

### [First modification]

The present technology may be applied when content which can be disassembled into a plurality of segments, such as a moving image (movie or TV show) or an electronic book is recommended, in addition to the above-mentioned music. For example, in the case of the moving image, a preferable scene of the user is recommended and in the case of the electronic book, a preferable phrase or segment of the user is recommended.

### [Second modification]

Further, the recommendation in the unit of segment and the recommendation in the unit of content may be switched or simultaneously performed. Further, a playlist in which the segment unit and the content unit are mixed may be generated.

A playlist including content including a segment extracted by the preference of the user is generated to be delivered. In this case, for example, a position of the extracted segment in the content is marked to be presented to the user to indicate a reason why the content in the playlist is selected.

### [Third modification]

Further, even though in Fig. 1, one server 11 is illustrated, two or more servers may be provided. For example, a server which recommends the content and a server which actually transmits the content data may be divided.

### [Fourth modification]

Further, the present technology may be applied not only to the distributable service, but also when the content possessed by the user is used through a device which is possessed by the user or the network at home.

For example, by allowing the client 12 to have a function of the server 11, the user may check-in at the segment of the content maintained by the client 12 or assign the segment assignment information. Further, based on the checked segment or the assigned segment assignment information, the segment may be recommended or a playlist or a slide-show may be generated using the content of the client 12.

By doing this, the user may enjoy the possessed content not only in the unit of content, but also in the unit of segment.

### [Fifth modification]

The above-described content reproducing screen is an example and another type may be available. For example, if a position of the segment with the segment assignment information in the content is easily recognized, the method of displaying the segment assignment information is not limited to the above-mentioned method.

### [Sixth modification]

Further, a type of the above-described segment assignment information is an example and the type and the number of information which are assigned to the segment are arbitrarily set. Further, a method of inputting the segment assignment information is an example and another method or another input screen may be used to input the information.

### [Configuration example of computer]

A series of processes described above may be performed by hardware or software. When the series of processes are performed by the software, a program which configures the software is installed in the computer. Here, the computer may include a computer which is assembled with a dedicated hardware or a general-purpose personal computer in which various programs are installed to perform various functions.

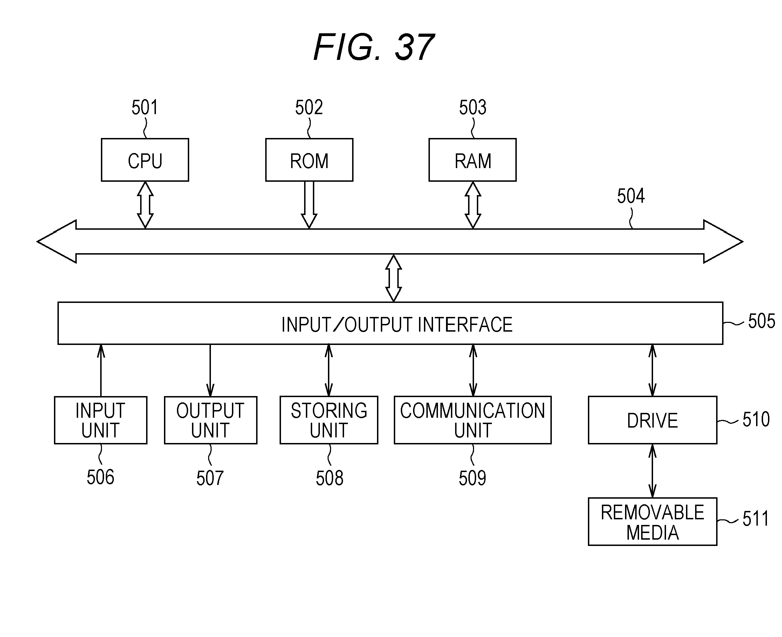

Fig. 37 is a block diagram illustrating a configuration example of hardware of the computer which executes the series of processes described above by the program.

In the computer, a central processing unit (CPU) 501, a read only memory (ROM) 502, and a random access memory (RAM) 503 are connected to each other by a bus 504.

An input/output interface 505 is connected to the bus 504. An input unit 506, an output unit 507, a storing unit 508, a communication unit 509, and a drive 510 are connected to the input/output interface 505.

The input unit 506 is configured by a keyboard, a mouse, a microphone and the like. The output unit 507 is configured by a display, a speaker and the like. The storing unit 508 is configured by a hard disk, non-volatile memory or the like. The communication unit 509 is configured by a network interface and the like. The drive 510 drives a removable media 511 such as a magnetic disk, an optical disk, a magneto-optical disk, or a semiconductor memory.

In the computer configured as described above, the CPU 501 loads the program stored in the storing unit 508 through the input/output interface 505 and the bus 504 in the RAM 503 and executes the program to perform the above-described series of processes.

The program which is executed by the computer (CPU 501) may be recorded in the removable media 511 as a package media to be provided. Further, the program may be provided through a wired or wireless transmission media such as a local area network, the Internet, or digital satellite broadcasting.

In the computer, the removable media 511 is mounted in the drive 510 so that the program is installed in the storing unit 508 through the input/output interface 505. Further, the program is received by the communication unit 509 and installed in the storing unit 508 through the wired or wireless transmission medium. Further, the program may be installed in the ROM 502 or the storing unit 508 in advance.

Further, a program which is executed by a computer may be a program which performs a process in time series in the order described in the specification or in parallel, or performs a process at a required timing, for example, at the time of calling.

Further, in the specification, it is assumed that a terminology of a system may refer to an overall device which includes a plurality of devices or units.

Further, the embodiments of the present technology are not limited to the above-described embodiments but may be modified without departing from the gist of the present technology.

Further, the present technology may have the following configurations.

### (1)

An information processing device, including:
a reproducing unit that reproduces content;
a display control unit that controls assignment information assigned to designate a segment having a duration of time of a part of content by a user to be displayed in accordance with a position of the segment in the content, during the reproduction of content; and
an acquiring unit that acquires information indicating a segment designated by the user for the reproduced content and the assignment information which is assigned to the designated segment.

### (2)

The information processing device according to (1), wherein the display control unit controls the assignment information such that only an interval including at least a segment to which the assignment information is assigned is displayed.

### (3)

The information processing device according to (2), wherein the display control unit fades in the assignment information at the time of starting the displaying and fades out the assignment information at the time of ending the displaying.

### (4)

The information processing device according to (1), wherein the display control unit controls the assignment information to be scrolled in a predetermined direction and information indicating a segment in the content to which the assignment information is assigned to be displayed, as the reproduction of the content is progressed.

### (5)

The information processing device according to any one of (1) to (4), further including:
a receiving unit that receives content and the assignment information which is assigned to each of the segments of the content from a server,
wherein the display control unit controls the assignment information received from the server to be displayed in accordance with a position of the segment to which the assignment information is assigned, in the content, during the reproduction of the content received from the server.

### (6)

The information processing device according to (5), wherein the receiving unit further receives information indicating a user who assigns the assignment information from the server, and
the display control unit controls the assignment information and the information indicating the user who assigns the assignment information to be displayed.

### (7)

The information processing device according to (5) or (6), further including:
a transmitting unit that transmits information indicating a segment designated for the reproduced content by a user and the user who designates the segment and the assignment information which is assigned to the designated segment to the server.

### (8)

The information processing device according to any one of (5) to (7), wherein the receiving unit sequentially receives assignment information which is assigned to the segment of each content in another information processing device from the server, and
the display control unit controls the received assignment information to be sequentially displayed in time series.

### (9)

The information processing device according to any one of (1) to (8), wherein the assignment information includes at least one of text data, a file, evaluation for a segment, and link information to another segment.

### (10)

The information processing device according to any one of (1) to (9), further including:
a manipulating unit that designates a segment for content which is being reproduced.

### (11)

The information processing device according to (10), wherein the manipulating unit is manipulated to designate a segment in a predetermined unit as a reference, based on a structure of the content.

### (12)

An information processing method of an information processing device which reproduces content, the method including:
controlling assignment information assigned to designate a segment having a duration of time of a part of content by a user to be displayed in accordance with a position of the segment in the content, during the reproduction of content; and
acquiring information indicating a segment designated by the user for the reproduced content and the assignment information which is assigned to the designated segment.

### (13)

A program which allows a computer to execute a process, the process including:
controlling assignment information assigned to designate a segment having a duration of time of a part of content by a user to be displayed in accordance with a position of the segment in the content, during the reproduction of content; and
acquiring information indicating a segment designated by the user for the reproduced content and the assignment information which is assigned to the designated segment.

Alternatively, the present technology may have the following configurations.

### (1)

An information processing device, including:
an acquiring unit that acquires designated information including information indicating a segment which is a part of content designated by a user; and
a recommending unit that recommends the content in the unit of segment based on the collected designated information.

### (2)

The information processing device of (1), in which the designated information includes assignment information which is information assigned to the segment designated by the user and the recommending unit recommends the content in the unit of segment based on the assignment information.

### (3)

The information processing device of (2), in which the assignment information includes text data, and the recommending unit recommends a segment to which text data similar to text data assigned by the user is assigned.

### (4)

The information processing device of (2) or (3), in which the content is music, and the assignment information includes an image, the device further including:
an analyzing unit that analyzes a correlation between a feature amount of the segment and a feature amount of an image which is assigned to the segment; and
a selecting unit that selects combination of the segment and the image based on the analysis result of the correlation.

### (5)

The information processing device of any one of (2) to (4) further including:
a reproducing unit that reproduces the content; and
a display control unit that controls the assignment information assigned to the segment of the content to be displayed in accordance with the position of the segment in the content during the reproduction of the content.

### (6)

The information processing device of (5), further including: a manipulating unit that designates a segment for the content which is being reproduced.

### (7)

The information processing device of any one of (2) to (6), in which the assignment information includes at least one of text data, a file, evaluation for the segment, and link information to another segment.

### (8)

The information processing device of any one of (1) to (7), in which the recommending unit recommends the content in the unit of segment based on a feature amount of the segment designated by the user.

### (9)

The information processing device of (8), in which the recommending unit recommends a segment having a feature amount similar to the feature amount of the segment designated by the user.

### (10)

The information processing device of any one of (1) to (4) and (7) to (9), in which the acquiring unit acquires the designated information from a plurality of other information processing devices, and the recommending unit recommends the content in the unit of segment based on the designated information acquired from the plurality of other information processing devices.

### (11)

The information processing device of (10), in which the designated information further includes information indicating the user who designates the segment and the recommending unit recommends the content in the unit of segment based on a history of the segment designated by the user.

### (12)

The information processing device of (11), in which the recommending unit recommends another segment designated by another user who designates the same segment as a segment designated by a target user who is a target to recommend a segment to the target user.

### (13)

The information processing device of (11) or (12), in which the recommending unit recommends another segment which is designated by a user who is similar to a target user who is a target to recommend a segment to the target user.

### (14)

An information processing method of an information processing device which recommends content, the method including:
acquiring designated information including information indicating a segment which is a part of content designated by a user; and
recommending the content in the unit of segment based on the collected designated information.

### (15)

A program which allows a computer to execute a process, the process including:
acquiring designated information including information indicating a segment which is a part of content designated by a user; and
recommending the content in the unit of segment based on the collected designated information.

### (16)

An information processing system, including:
a server; and
a client,
in which the server includes a delivery unit which delivers content to the client, a first receiving unit which receives designated information including information indicating a segment which is a part of content designated by a user in the client, and a recommending unit which recommends the content in the unit of segment to the client based on the designated information collected from the client, and
the client includes a second receiving unit which receives content from the server, a reproducing unit which reproduces the received content, an acquiring unit which acquires information indicating a segment of the content designated by the user, and a transmitting unit which transmits the designated information including information indicating a segment designated by the user to the server.

### (17)

An information processing method, including:
allowing a server to deliver content to a client;
allowing the client to reproduce the content received from the server, acquire information indicating a segment which is a part of content designated by the user, and transmit designed information including the acquired information to the server; and
allowing the server to recommend the content in the unit of segment to the client based on the designated information collected from the client.

### REFERENCE SIGNS LIST

- 1: Information processing system
- 11: Server
- 12: Client
- 31: Storing unit
- 32: Analyzing unit
- 33: Comment label determining unit
- 34: Feature amount label determining unit
- 35: Recommending unit
- 36: Slide-show generating unit
- 37: Delivery unit
- 38: Transmitting unit
- 39: Receiving unit
- 40: Check-in information acquiring unit
- 51: Content DB
- 52: Check-in information DB
- 53: User DB
- 54: Synonym dictionary
- 55: Label DB
- 61: Segment analyzing unit
- 62: User analyzing unit
- 63: Assignment information analyzing unit
- 64: Correlation analyzing unit
- 65: Statistic analyzing unit
- 71: Segment extracting unit
- 72: Segment recommending unit
- 73: Playlist generating unit
- 101: Receiving unit
- 103: UI control unit
- 104: Reproducing unit
- 105: Display unit
- 106: Voice output unit
- 107: Manipulating unit
- 108: Check-in information generating unit
- 109: Transmitting unit

## Claims

1. An information processing device, comprising:
a reproducing unit that reproduces content;
a display control unit that controls assignment information assigned to designate a segment having a duration of time of a part of content by a user to be displayed in accordance with a position of the segment in the content, during the reproduction of content; and
an acquiring unit that acquires information indicating a segment designated by the user for the reproduced content and the assignment information which is assigned to the designated segment.

2. The information processing device according to claim 1, wherein the display control unit controls the assignment information such that only an interval including at least a segment to which the assignment information is assigned is displayed.

3. The information processing device according to claim 2, wherein the display control unit fades in the assignment information at the time of starting the displaying and fades out the assignment information at the time of ending the displaying.

4. The information processing device according to claim 1, wherein the display control unit controls the assignment information to be scrolled in a predetermined direction and information indicating a segment in the content to which the assignment information is assigned to be displayed, as the reproduction of the content is progressed.

5. The information processing device according to claim 1, further comprising:
a receiving unit that receives content and the assignment information which is assigned to each of the segments of the content from a server,
wherein the display control unit controls the assignment information received from the server to be displayed in accordance with a position of the segment to which the assignment information is assigned, in the content, during the reproduction of the content received from the server.

6. The information processing device according to claim 5, wherein the receiving unit further receives information indicating a user who assigns the assignment information from the server, and
the display control unit controls the assignment information and the information indicating the user who assigns the assignment information to be displayed.

7. The information processing device according to claim 5, further comprising:
a transmitting unit that transmits information indicating a segment designated for the reproduced content by a user and the user who designates the segment and the assignment information which is assigned to the designated segment to the server.

8. The information processing device according to claim 5, wherein the receiving unit sequentially receives assignment information which is assigned to the segment of each content in another information processing device from the server, and
the display control unit controls the received assignment information to be sequentially displayed in time series.

9. The information processing device according to claim 1, wherein the assignment information includes at least one of text data, a file, evaluation for a segment, and link information to another segment.

10. The information processing device according to claim 1, further comprising:
a manipulating unit that designates a segment for content which is being reproduced.

11. The information processing device according to claim 10, wherein the manipulating unit is manipulated to designate a segment in a predetermined unit as a reference, based on a structure of the content.

12. An information processing method of an information processing device which reproduces content, the method comprising:
controlling assignment information assigned to designate a segment having a duration of time of a part of content by a user to be displayed in accordance with a position of the segment in the content, during the reproduction of content; and
acquiring information indicating a segment designated by the user for the reproduced content and the assignment information which is assigned to the designated segment.

13. A program which allows a computer to execute a process, the process comprising:
controlling assignment information assigned to designate a segment having a duration of time of a part of content by a user to be displayed in accordance with a position of the segment in the content, during the reproduction of content; and
acquiring information indicating a segment designated by the user for the reproduced content and the assignment information which is assigned to the designated segment.
